# EUROPEAN PATENT APPLICATION

(11) **EP 4 775 542 A1**
(43) Date of publication of application: **15.07.2026**
(21) Application number: 24862767.1
(22) Date of filing: 03.09.2024
(51) Int. Cl.: C01G 33/00, C01G 35/00, C01G 39/00, C01G 41/00, C09D 7/61, C09D 17/00, C09D 201/00, H01M 4/36

(54) **METAL ACID COMPOUND DISPERSION AND METHOD FOR PRODUCING SAME**

(30) Priority: 08.09.2023 JP 2023146512; 07.03.2024 JP 2024034991
(71) Applicant: Mitsui Kinzoku Company, Limited, Tokyo 141-8584 (JP)
(72) Inventor: MIURA Takashi, Omuta-shi, Fukuoka 836-0003 (JP); MOTONO Ryuji, Omuta-shi, Fukuoka 836-0003 (JP); HARA Syuhei, Omuta-shi, Fukuoka 836-0003 (JP)
(74) Representative: Parker, Andrew James
(86) International application number: PCT/JP2024/031528
(87) International publication number: WO 2025/053115

(57) **Abstract**

A metal acid compound dispersion of the present invention is a metal acid compound dispersion containing two or more metal species M selected from the group consisting of niobium, tantalum, molybdenum, tungsten, and titanium, containing one or more elements X selected from the group consisting of alkali metal elements and/or alkaline earth metal elements, and a phosphorus compound and/or a chlorine compound, in which a particle size (D50) of the particles in the metal acid compound dispersion as determined by a dynamic light scattering method is 1000 nm or less.

## Description

### Technical Field

The present invention relates to a metal acid compound dispersion and a method for producing the same.

### Background Art

As a metal acid compound, lithium metal oxide obtained by combining a metal element such as niobium, tantalum, molybdenum, or tungsten and lithium as an alkali metal element is used for a nonlinear optical material, a piezoelectric element, a battery material, and the like. For example, in a composite active material particle capable of reducing battery resistance generated in an all-solid-state lithium ion battery, lithium metal oxide is mentioned as a lithium ion conductive oxide covering at least a part of a surface of the composite active material particle. Further, for example, Patent Literature 1 discloses a piezoelectric sensor in which a piezoelectric film layer containing lithium niobate powder is formed on a substrate layer of the piezoelectric sensor. In the piezoelectric sensor disclosed in Patent Literature 1, a mixture obtained by mixing a lithium niobate powder and a sol-gel solution is spray-coated and then sintered to form the piezoelectric film layer. In addition, the tantalum oxide sol disclosed in Patent Literature 2, specifically, lithium tantalate is excellent in optical characteristics, non-linear characteristics, and electro-optical characteristics, and is used for a piezoelectric element or the like.

### Citation List

### Patent Literature

Patent Literature 1: JP 2023-63187 A
Patent Literature 2: JP 08-143315 A

### Summary of Invention

### Technical Problem

However, in the piezoelectric sensor disclosed in Patent Literature 1, when a mixture obtained by mixing a lithium niobate powder and a sol-gel solution is sprayapplied, if dispersibility or solubility of the lithium niobate powder in a solvent is low, it is difficult to form a uniform piezoelectric film layer. Also, if the storage stability of the mixture of the lithium niobate powder and the solvent is poor, the spray coating operation becomes complicated. Furthermore, since the tantalum oxide sol disclosed in Patent Literature 2 contains an organic component that is hardly volatilized, such as oxalic acid, the organic component may be a factor that hinders formation of a uniform film, and may be a factor that inhibits a catalytic action when the tantalum oxide sol is used as a catalyst additive. In addition, lithium tantalate had poor dispersibility and solubility in water as compared with lithium niobate, and was prone to form precipitates over time, and did not have excellent storage stability.

In view of the above problems, an object of the present invention is to provide a metal acid compound dispersion having high dispersibility in a polar solvent, particularly water, good solubility in water, and excellent storage stability, and a method for producing the same.

### Solution to Problem

A metal acid compound dispersion of the present invention made to solve the above problems is a metal acid compound dispersion containing two or more metal species M selected from the group consisting of niobium, tantalum, molybdenum, tungsten, and titanium, containing one or more elements X selected from the group consisting of alkali metal elements and/or alkaline earth metal elements, and a phosphorus compound and/or a chlorine compound, in which a particle size (D50) of the particles in the metal acid compound dispersion as determined by a dynamic light scattering method is 1000 nm or less.

When the metal acid compound dispersion of the present invention contains two or more metal species M selected from the group consisting of niobium, tantalum, molybdenum, tungsten, and titanium, and contains one or more elements X selected from the group consisting of alkali metal elements and/or alkaline earth metal elements, and a phosphorus compound and/or a chlorine compound, in which a particle size (D50) of the particles in the tantalic acid compound dispersion as determined by a dynamic light scattering method is 1000 nm or less, it is preferable from the viewpoint of improving the dispersibility and solubility in a polar solvent, particularly water.

The metal acid compound dispersion of the present invention contains two or more metal species M selected from the group consisting of niobium, tantalum, molybdenum, tungsten, and titanium. It is considered that the metal species M are present as oxides in the metal acid compound dispersion of the present invention. Specifically, it is considered that niobium is present as anions such as NbO₃⁻ or polyoxometalate (polyacid) ions in which a plurality of niobium atoms and oxygen atoms are bonded. In addition, it is considered that tantalum is present as anions such as TaO₃⁻ or polyoxometalate (polyacid) ions in which a plurality of tantalum atoms and oxygen atoms are bonded. Further, it is considered that molybdenum is present as anions such as MoO₄²⁻ or polyoxometalate (polyacid) ions in which a plurality of molybdenum atoms and oxygen atoms are bonded. Furthermore, it is considered that tungsten is present as anions such as (W₂O₇)²⁻ or (W₁₂O₁₀)⁸⁻ or polyoxometalate (polyacid) ions in which a plurality of tungsten atoms and oxygen atoms are bonded. Moreover, it is considered that titanium is present as anions such as (Ti₃O₇)²⁻ or polyoxometalate (polyacid) ions in which a plurality of titanium atoms and oxygen atoms are bonded.

Further, the metal species M preferably contain tantalum. Specifically, the metal species M may be two metal species of tantalum and one metal species selected from niobium, molybdenum, tungsten, and titanium, may be three metal species of tantalum and two metal species selected from niobium, molybdenum, tungsten, and titanium, may be four metal species of tantalum and three metal species selected from niobium, molybdenum, tungsten, and titanium, or may contain all five metal species of tantalum, niobium, molybdenum, tungsten, and titanium. The metal species M may be two metal species selected from niobium, molybdenum, tungsten, and titanium, three metal species selected from niobium, molybdenum, tungsten, and titanium, or four metal species selected from niobium, molybdenum, tungsten, and titanium, excluding tantalum.

The metal acid compound dispersion of the present invention contains one or more elements X selected from the group consisting of alkali metal elements and/or alkaline earth metal elements. That is, it is presumed that the metal acid in the metal acid compound dispersion of the present invention is present in the dispersion as ions in a state of being ionically bonded to ions of one or more elements X selected from the group consisting of alkali metal elements and/or alkaline earth metal elements. It is considered that in the metal acid compound dispersion of the present invention, hydroxide ions are present as anions, but halide ions such as fluoride ions and chloride ions hardly exist, and the alkali metal element and the alkaline earth metal element are present as cations.

Further, the element X preferably contains Li. In addition, the element X is not limited to only one alkali metal element of Li, and is suitably two alkali metal elements of Li and Na or K or three alkali metal elements of Li, Na and K. Furthermore, the element X may be one alkali metal element of Na or K, or two alkali metal elements of Na and K.

The metal acid compound dispersion of the present invention contains a phosphorus compound. Also, the metal acid compound dispersion of the present invention preferably contains the phosphorus compound containing one or more selected from inorganic phosphorus compounds, organic phosphorus compounds, and salts thereof.

Examples of the inorganic phosphorus compound include inorganic phosphoric acids, particularly phosphoric acids, phosphonic acids, and phosphinic acids. Specific examples of the phosphoric acids include phosphoric acid (CAS No. 7664-38-2), condensed phosphoric acid, pyrophosphoric acid (CAS No. 2466-09-3), and polyphosphoric acid (CAS No. 8071-16-1). Further, examples of the phosphonic acids include phosphorous acid (CAS No. 13598-36-2) and hypophosphorous acid (CAS No. 6303-21-5). Furthermore, examples of the phosphinic acids include phosphinic acid (CAS No. 6303-21-5).

In addition, examples of the organic phosphorus compound include phosphoric acid esters, organic phosphorous acid esters, organic phosphonic acids, and organic phosphines. Specific examples of the organic phosphorus compound include methyl phosphate (CAS No. 52932-95-3), ethyl phosphate (CAS No. 37203-76-2), butyl phosphate (CAS No. 107-66-4), phenyl phosphate (CAS No. 701-64-4), dimethyl phosphate (CAS No. 813-78-5), diethyl phosphate (CAS No. 598-02-7), dibutyl phosphate (CAS No. 107-66-4), diphenyl phosphate (CAS No. 838-85-7), trimethyl phosphate (CAS No. 512-56-1), triethyl phosphate (CAS No. 78-40-0), tributyl phosphate (CAS No. 126-73-8), and triphenyl phosphate (CAS No. 115-86-6).

In addition, as organic phosphite acids and organic phosphonate esters, methylphosphonic acid (CAS No. 993-13-5), ethylphosphonic acid (CAS No. 6779-09-5), butylphosphonic acid (CAS No. 3321-64-0), phenylphosphonic acid (CAS No. 1571-33-1), dimethyl phosphite (dimethyl phosphonate) (CAS No. 868-85-9), diethyl phosphite (diethyl phosphonate) (CAS No. 762-04-9), dibutyl phosphite (dibutyl phosphonate) (CAS No. 1809-19-4), diphenyl phosphite (diphenyl phosphonate) (CAS No. 4712-55-4), trimethyl phosphite (CAS No. 121-45-9), triethyl phosphite (CAS No. 122-52-1), tributyl phosphite (CAS No. 102-85-2), and triphenyl phosphite (CAS No. 101-02-0).

Then, examples of the salts of the inorganic phosphorus compound and/or the organic phosphorus compound include ammonium salts of the inorganic phosphorus compound and/or the organic phosphorus compound, salts with organic nitrogen compounds, alkali metal salts, and alkaline earth metal salts.

Examples of the organic phosphinic acids include triphenylphosphine (CAS No. 603-35-0).

Examples of the inorganic ammonium phosphate, salts with organic nitrogen compounds, alkali metal salts, and alkaline earth metal salts include ammonium phosphate, primary ammonium phosphate (CAS No. 7722-76-1), secondary ammonium phosphate (CAS No. 7783-28-0), sodium metaphosphate (CAS No. 10361-03-2), potassium metaphosphate (CAS No. 7790-53-6), sodium hexametaphosphate (CAS No. 10124-56-8), potassium hexametaphosphate, sodium pyrophosphate (CAS No. 7722-88-5), potassium pyrophosphate (CAS No. 7320-34-5), sodium polyphosphate (CAS No. 68915-31-1), potassium polyphosphate, sodium tripolyphosphate (CAS No. 7758-29-4), potassium tripolyphosphate (CAS No. 13845-36-8), sodium ultrapolyphosphate, and potassium ultrapolyphosphate.

Moreover, in the metal acid compound dispersion of the present invention, the phosphorus compound preferably contains one or more selected from phosphoric acid (CAS No. 7664-38-2), condensed phosphoric acid, pyrophosphoric acid (CAS No. 2466-09-3), polyphosphoric acid (CAS No. 8071-16-1), phosphorous acid (CAS No. 13598-36-2), hypophosphorous acid (CAS No. 6303-21-5), ammonium phosphate, primary ammonium phosphate (CAS No. 7722-76-1), secondary ammonium phosphate (CAS No. 7783-28-0), ammonium pyrophosphate, and ammonium polyphosphate. When the phosphorus compound is phosphoric acid and a salt of phosphoric acid, it is more preferable to prepare a solution having a pH closer to neutrality. On the other hand, when the phosphorus compound is condensed phosphoric acid, or pyrophosphoric acid, polyphosphoric acid, or a salt of condensed phosphoric acid as the condensed phosphoric acid, it is more preferable to prepare a solution having a high pH.

In the present specification, the "phosphoric acid" refers to orthophosphoric acid, and does not include phosphoric acids such as pyrophosphoric acid, polyphosphoric acid, and phosphorous acid. The phosphorus compound may form a compound with an alkali metal element or an alkaline earth metal element. For example, when the phosphorus compound contains a hydroxyl group (P-OH group), the phosphorus compound has a structure in which some or all of hydrogen atoms in the hydroxy group are substituted with alkali metal elements or alkaline earth metal elements.

The metal acid compound dispersion of the present invention further contains a chlorine compound.

Examples of the chlorine compound include hydrochloric acid (CAS number: 7647-01-0), hypochlorous acid (CAS number: 7790-92-3), chlorous acid (CAS number: 13898-47-0), chloric acid (CAS number: 7790-93-4), and perchloric acid (CAS number: 7601-90-3).

In addition, the chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

When corrosion of the substrate or elution of the substrate is concerned depending on the material, type, and the like of the substrate to which the metal acid compound dispersion of the present invention is applied if the metal acid compound dispersion of the present invention contains a chlorine compound, it is preferable that the chlorine compound is not contained. For example, when the metal acid compound dispersion of the present invention is used for covering a positive electrode or a positive electrode material for a lithium ion secondary battery described later, it is preferable that the metal acid compound dispersion does not contain a chlorine compound.

Furthermore, when the particle size (D50) of the particles in the metal acid compound dispersion as determined by a dynamic light scattering method is 1000 nm or less, the particles have high dispersibility and are stable with little change over time, and it is preferable from the viewpoint of reactivity in reaction or complexation with other substances and film uniformity during film formation. In addition, the particle size (D50) is preferably a smaller particle size, more preferably 800 nm or less, still more preferably 600 nm or less, particularly preferably 500 nm or less, more particularly preferably 300 nm or less, still more particularly preferably 200 nm or less, further particularly preferably 100 nm or less, even preferably 50 nm or less, even more preferably 30 nm or less, even still more preferably 20 nm or less, even further preferably 10 nm or less, even particularly preferably 8 nm or less, even more preferably 6 nm or less, even still more particularly preferably 4 nm or less, even further particularly preferably 2 nm or less, especially preferably 1 nm or less, more especially preferably 0.6 nm or less, and most preferably over 0. As described above, a liquid in which the particle size (D50) of the metal acid compound is 1000 nm or less as a result of measuring the particle size (D50) of the particles in the metal acid compound dispersion of the present invention using a dynamic light scattering method is referred to as the "metal acid compound dispersion" of the present invention.

Here, the dynamic light scattering is a method in which light scattering intensity from a group of particles moving in a Brownian motion is measured by irradiating a solution such as a suspension solution with light such as laser light, and a particle size and a distribution are obtained from a temporal variation of the intensity. Specifically, the method for evaluating the particle size distribution is performed in accordance with JIS Z 8828:2019 "Particle size analysis-dynamic light scattering" using a zeta potential/particle size/molecular weight analyzer (manufactured by Otsuka Electronics Co., Ltd.: ELSZ-2000). In order to remove dust and the like in the solution to be measured immediately before measurement, the solution is filtered with a filter having a pore size of 1 µm. The particle size (D50) refers to a median diameter (D50) that is a particle size indicating a 50% cumulative value of a cumulative distribution curve. In the present specification, unless otherwise specified, the "particle size (D50)" includes both an "initial particle size D50" indicating the particle size (D50) of the particles in the metal acid compound dispersion of the present invention adjusted to a liquid temperature of 25°C immediately after being generated, and a "temporal particle size D50" indicating the particle size (D50) of the particles in the metal acid compound dispersion after being left to stand in a thermostat set at a room temperature of 25°C for 1 month from the day on which the metal acid compound dispersion of the present invention was generated.

In addition, the metal acid compound dispersion of the present invention is a metal acid compound dispersion containing two or more metal species M selected from the group consisting of niobium, tantalum, molybdenum, tungsten, and titanium, containing one or more elements X selected from the group consisting of alkali metal elements and/or alkaline earth metal elements, and a phosphorus compound and/or a chlorine compound, in which a maximum value of transmittance in a wavelength region of 400 nm to 760 nm is 70%T or more.

Here, two or more metal species M selected from the group consisting of niobium, tantalum, molybdenum, tungsten, and titanium, one or more elements X selected from the group consisting of alkali metal elements and/or alkaline earth metal elements, and a phosphorus compound and/or a chlorine compound in the metal acid compound dispersion of the present invention are as described above, and thus detailed description thereof is omitted.

When the metal acid compound dispersion of the present invention has a maximum value of transmittance in a wavelength region of 400 nm to 760 nm of 70%T or more, it is preferable in that the dispersibility is high and the uniformity of components in a liquid is excellent. The maximum value of the transmittance in the wavelength region of 400 nm to 760 nm is more preferably 72%T or more, still more preferably 74%T or more, particularly preferably 76%T or more, further particularly preferably 78%T or more, still more particularly preferably 80%T or more, further particularly preferably 85%T or more, even more preferably 90%T or more, even still more preferably 95%T or more, even particularly preferably 97%T or more, especially preferably 98%T or more, more especially preferably 99%T or more, and most preferably 100%T.

In addition, the metal acid compound dispersion of the present invention may have a transmittance of 70%T or more at any one of wavelengths of 400 nm, 600 nm, and 750 nm, or at two or more wavelengths. The transmittance at any one of wavelengths of 400 nm, 600 nm, and 750 nm, or at two or more wavelengths may be 72%T or more, 74%T or more, 76%T or more, 78%T or more, 80%T or more, 85%T or more, 90%T or more, 95%T or more, 97%T or more, 98%T or more, 99%T or more, or 100%T or more.

Furthermore, in the metal acid compound dispersion of the present invention, a minimum value of transmittance in a wavelength region of 400 nm to 760 nm may be 70%T or more. The minimum value of the transmittance in the wavelength region of 400 nm to 760 nm may be 72%T or more, 74%T or more, 76%T or more, 78%T or more, 80%T or more, 85%T or more, 90%T or more, 95%T or more, 97%T or more, 98%T or more, 99%T or more, or 100%T or more.

The measured value of the transmittance described above may exceed 100%T due to a measurement error or the like. However, since the theoretical upper limit value is 100%, the transmittance is regarded as 100%T when the measured value exceeds 100%T. As described above, the liquid in a state in which the maximum value of the transmittance in the wavelength region of 400 nm to 760 nm of the metal acid compound dispersion of the present invention is 70%T or more is defined as the "metal acid compound dispersion" of the present invention. In the present specification, unless otherwise specified, the "transmittance" includes both an "initial transmittance" indicating the transmittance of the metal acid compound dispersion of the present invention adjusted to a liquid temperature of 25°C immediately after being generated, and a "temporal transmittance" indicating the transmittance of the metal acid compound dispersion after being left to stand in a thermostat set at a room temperature of 25°C for 1 month from the day on which the metal acid compound dispersion of the present invention was generated.

Here, the above-described transmittance is determined by measuring an ultraviolet-visible absorption spectrum (UV-Vis absorption spectrum) of the metal acid compound dispersion of the present invention in accordance with JIS K 0115, 2004 "General rules for molecular absorptiometric analysis" according to the following transmittance measurement conditions.

### = Transmittance measurement conditions =

- Measuring device: Ultraviolet-visible near-infrared spectrophotometer Model UH4150 (manufactured by Hitachi High-Tech Science Corporation)
- Measurement mode: Wavelength scan
- Data mode: %T (transmission)
- Measurement wavelength range: 200 nm to 2,000 nm
- Scanning speed: 600 nm/min
- Sampling interval: 2 nm

Incidentally, the "dispersion" in the present invention is not limited to one in which a solute is dispersed or mixed in a state of a single molecule in a solvent, and also includes an aggregate in which a plurality of molecules are attracted by intermolecular interaction, for example, one in which (1) a multimer molecule, (2) a solvate molecule, (3) a molecular cluster, (4) colloidal particles, and the like are dispersed in a solvent.

In addition, the metal acid compound dispersion of the present invention may further contain hydrogen peroxide.

The metal acid compound dispersion of the present invention can generate a tantalum compound aqueous solution by adding hydrogen peroxide water to a tantalum fluoride aqueous solution and mixing them in a method for producing a tantalum acid compound dispersion among methods for producing a metal acid compound dispersion described later, and thus the metal acid compound dispersion of the present invention may contain hydrogen peroxide.

In the method for detecting hydrogen peroxide in the metal acid compound dispersion of the present invention, the content of hydrogen peroxide in the dispersion can be confirmed by measuring the relative intensity of the absorbance of hydrogen peroxide with respect to the standard solution using, for example, a standard addition method. Specifically, from the ultraviolet-visible absorption spectra of a standard solution containing a known content, for example, 1 mass% of hydrogen peroxide and a standard solution to which hydrogen peroxide is not added, a wavelength region where a change in absorbance associated with formation of a peroxo complex is observed is found, and when a difference in absorbance between the standard solution to which hydrogen peroxide is not added and a sample having an unknown hydrogen peroxide content in the wavelength region is less than 1%, it can be confirmed that the sample having an unknown hydrogen peroxide content does not substantially contain hydrogen peroxide. When hydrogen peroxide is contained in the dispersion, hydrogen peroxide reacts with, for example, a polyacid of tantalum to form a peroxo complex, and thus it can be confirmed that hydrogen peroxide is not contained in the dispersion by confirming the difference in absorbance between the dispersion and the standard solution to which hydrogen peroxide is not added as described above. In addition to the standard addition method described above, qualitative analysis and quantitative analysis of hydrogen peroxide in the dispersion may be performed by a method of adding a reagent that causes a color reaction with hydrogen peroxide to the dispersion and measuring the color development, or by adding a reagent that causes a fluorescence reaction with hydrogen peroxide to the dispersion and measuring the light emission, using, for example, a commercially available hydrogen peroxide measurement kit.

Moreover, the metal acid compound dispersion of the present invention may further contain ammonia and/or an organic nitrogen compound.

The metal acid compound dispersion of the present invention may contain an ionized alkaline aqueous solution, for example, ammonia or an organic nitrogen compound. The content of ammonia and the organic nitrogen compound in the metal acid compound dispersion of the present invention is preferably 10 mass% or less, more preferably 5 mass% or less, still more preferably 3 mass% or less, and particularly preferably 1 mass% or less with respect to 100 mass% of the metal acid compound dispersion of the present invention.

Although described in detail in the method for producing a metal acid compound dispersion of the present invention described later, for example, in the method for producing a tantalic acid compound dispersion, a tantalic acid-containing precipitate, for example, a hydrous ammonium tantalate cake, which is a precipitation slurry containing tantalum, is generated by a reverse neutralization method in which an acidic tantalum complex aqueous solution is added to an alkaline aqueous solution, for example, ammonia water, and then a tantalic acid compound dispersion is generated. Therefore, ammonia is considered to contain ammonium ions and to be present in the dispersion as cations. Also, in the method for producing a tantalic acid compound dispersion, the tantalic acid-containing precipitate obtained through the reverse neutralization method in which the acidic tantalum complex aqueous solution is added to ammonia water is mixed with the organic nitrogen compound to generate a tantalum compound neutralized aqueous solution, and thus the organic nitrogen compound is considered to be present in the dispersion as cations.

Examples of the method for measuring the ammonia content present in the dispersion include a method of adding sodium hydroxide to the dispersion to distill and separate ammonia and quantifying the ammonia content by an ion meter, a method of quantifying N₂ content in a gasified sample by a thermal conductivity meter, a Kjeldahl method, gas chromatography (GC), ion chromatography, and gas chromatography-mass spectrometry (GC-MS). In particular, a method of quantifying the ammonia content by an ion meter is preferable.

In addition, examples of the organic nitrogen compound include aliphatic amines, aromatic amines, amino alcohols, amino acids, polyamines, quaternary ammonium, guanidine compounds, and azole compounds.

Examples of the aliphatic amine include methylamine, dimethylamine, trimethylamine, ethylamine, methylethylamine, diethylamine, triethylamine, methyldiethylamine, dimethylethylamine, n-propylamine, din-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine and tert-butylamine, n-pentylamine, n-hexylamine, cyclohexylamine, and piperidine.

Examples of the aromatic amine include aniline, phenylenediamine, and diaminotoluene. Furthermore, examples of the amino alcohol include methanolamine, ethanolamine, propanolamine, butanolamine, pentanolamine, dimethanolamine, diethanolamine, trimethanolamine, methylmethanolamine, methylethanolamine, methylpropanolamine, methylbutanolamine, ethylmethanolamine, ethylethanolamine, ethylpropanolamine, dimethylmethanolamine, dimethylethanolamine, dimethylpropanolamine, methyldimethanolamine, methyldiethanolamine, diethylmethanolamine, trishydroxymethylaminomethane, bis(2-hydroxyethyl)aminotris(hydroxymethyl)methane, and aminophenol. Moreover, examples of the amino acid include alanine, arginine, aspartic acid, and EDTA. Further, examples of the polyamine include polyamines and polyether amines.

Examples of the quaternary ammonium include alkylimidazolium, pyridinium, pyrrolidinium, and tetraalkylammonium. Here, specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Specific examples of pyridinium and pyrrolidinium include N-butyl-pyridinium, N-ethyl-3-methyl-pyridinium, N-butyl-3-methyl-pyridinium, N-hexyl-4-(dimethylamino)-pyridinium, N-methyl-1-methylpyrrolidinium, and N-butyl-1-methylpyrrolidinium. Further, specific examples of tetraalkylammonium include tetramethylammonium, tetraethylammonium, tetrabutylammonium, and ethyl-dimethyl-propylammonium. Examples of an anion that forms a salt with the above-described cation include OH⁻, Cl⁻, Br⁻, I⁻, BF₄⁻, and HSO₄⁻.

Examples of the guanidine compound include guanidine, diphenylguanidine, and ditolylguanidine. Examples of the azole compound include imidazole compounds and triazole compounds. Here, specific examples of the imidazole compound include imidazole, 2-methylimidazole, and 2-ethyl-4-methylimidazole. Specific examples of the triazole compound include 1,2,4-triazole, methyl 1,2,4-triazole-3-carboxylate, and 1,2,3-benzotriazole.

Here, the organic nitrogen compound is preferably an aliphatic amine because it has high volatility and low toxicity. Specifically, an aliphatic amine having 1 to 4 carbon atoms is more preferable, and an aliphatic amine having 1 to 2 carbon atoms is particularly preferable. Examples thereof include methylamine and dimethylamine.

In addition, when the organic nitrogen compound is quaternary ammonium, it is preferable from the viewpoint of having not only high solubility but also high crystallization suppression and high solation suppression. For example, a tetraalkylammonium salt is preferable, a tetraalkylammonium hydroxide salt is more preferable, tetramethylammonium hydroxide and tetraethylammonium are particularly preferable, and tetramethylammonium hydroxide (TMAH) is further particularly preferable.

Furthermore, the organic nitrogen compound may not be one selected from aliphatic amines, aromatic amines, amino alcohols, amino acids, polyamines, quaternary ammonium, guanidine compounds, and azole compounds, but may be a mixture of two or more thereof. For example, a mixture of two types of an aliphatic amine and quaternary ammonium is preferable from the viewpoint that the solubility can be increased while suppressing the addition amount so as not to increase the toxicity.

Specific examples thereof include a mixture of two organic nitrogen compounds such as methylamine and tetramethylammonium hydroxide (TMAH), dimethylamine and tetramethylammonium hydroxide (TMAH), methylamine and dimethylamine, and a mixture of three organic nitrogen compounds such as methylamine, dimethylamine, and tetramethylammonium hydroxide (TMAH).

Examples of the method for measuring the content of the organic nitrogen compound present in the metal acid compound dispersion of the present invention include gas chromatography (GC), liquid chromatography (LC), mass spectrometry (MS), gas chromatography-mass spectrometry (GC-MS), and liquid chromatography-mass spectrometry (LC-MS). When an organic nitrogen compound having low volatility is contained, measurement of the content of the organic nitrogen compound by liquid chromatography (LC) or liquid chromatography-mass spectrometry (LC-MS) is preferable.

In the metal acid compound dispersion of the present invention, the content of metal species M in the metal acid compound dispersion is 0.01 mass% or more and 30 mass% or less in terms of metal species M atoms.

The content of metal species M in the metal acid compound dispersion of the present invention is preferably 0.01 mass% or more and 30 mass% or less in terms of metal species M atoms from the viewpoint of achieving both practical use and stability of the metal acid compound dispersion, more preferably 0.5 mass% or more and 25 mass% or less in terms of metal species M atoms, still more preferably 1 mass% or more and 20 mass% or less in terms of metal species M atoms, particularly preferably 1 mass% or more and 15 mass% or less in terms of metal species M atoms, more particularly preferably 3 mass% or more and 10 mass% or less in terms of metal species M atoms, and still more particularly preferably 5 mass% or more and 10 mass% or less in terms of metal species M atoms.

The content of metal species M can be determined as follows.

When the metal species M contained in the metal acid compound dispersion of the present invention is two types, tantalum and niobium, the sum of the tantalum content in terms of Ta atoms and the niobium content in terms of Nb atoms in the metal acid compound dispersion of the present invention is the content of metal species M in the metal acid compound dispersion of the present invention.

When the metal species M contained in the metal acid compound dispersion of the present invention is three, tantalum, niobium, and molybdenum, the sum of the tantalum content in terms of Ta atoms, the niobium content in terms of Nb atoms, and the molybdenum content in terms of Mo atoms in the metal acid compound dispersion of the present invention is the content of metal species M in the metal acid compound dispersion of the present invention.

When the metal species M contained in the metal acid compound dispersion of the present invention is four, tantalum, molybdenum, tungsten, and titanium, the sum of the tantalum content in terms of Ta atoms, the molybdenum content in terms of Mo atoms, the tungsten content in terms of W atoms, and the titanium content in terms of Ti atoms in the metal acid compound dispersion of the present invention is the content of metal species M in the metal acid compound dispersion of the present invention.

When the metal species M contained in the metal acid compound dispersion of the present invention is five, tantalum, niobium, molybdenum, tungsten, and titanium, the sum of the tantalum content in terms of Ta atoms, the niobium content in terms of Nb atoms, the molybdenum content in terms of Mo atoms, the tungsten content in terms of W atoms, and the titanium content in terms of Ti atoms in the metal acid compound dispersion of the present invention is the content of metal species M in the metal acid compound dispersion of the present invention.

Here, the content of metal species M in the metal acid compound dispersion is calculated by appropriately diluting the dispersion with dilute hydrochloric acid as necessary, and measuring Nb mass% in terms of Nb atoms, Ta mass% in terms of Ta atoms, Mo mass% in terms of Mo atoms, W mass% in terms of W atoms, and Ti mass% in terms of Ti atoms in accordance with JIS K0116:2014 using high-frequency inductively coupled plasma optical emission spectrometry (ICP emission spectrometry (manufactured by Agilent Technologies, Inc.: AG-5110)). In addition, when the metal acid in the metal acid compound dispersion of the present invention is an alkali metal or one ionically bonded to an alkaline earth metal, for example, a lithium metal acid salt ionically bonded to lithium ions, the lithium content may be calculated by measuring Li mass% in terms of Li atoms in the same manner as the content of metal species M. By specifying the content of metal species M and the lithium content in the metal acid compound dispersion of the present invention, a molar ratio Li/m of lithium (Li) of the lithium metal oxide contained in the metal acid compound dispersion of the present invention to the metal species M (m) can be specified. The content of each element X of one or more elements X selected from the group consisting of alkali metal elements other than lithium and/or alkaline earth metal elements can also be calculated by measuring X mass% of each element in terms of element X atoms, similarly to the content of metal species M.

Further, in the metal acid compound dispersion of the present invention, the phosphorus content in the metal acid compound dispersion is 0.01 mass% or more and 10 mass% or less in terms of P atoms.

When the phosphorus content in the metal acid compound dispersion of the present invention is 0.01 mass% or more and 10 mass% or less in terms of P atoms from the viewpoint of improving the dispersibility and solubility in a polar solvent, particularly water. Also, the phosphorus content is more preferably 0.01 mass% or more and 5 mass% or less in terms of P atoms, still more preferably 0.05 mass% or more and 2 mass% or less in terms of P atoms, and particularly preferably 0.05 mass% or more and 1 mass% or less in terms of P atoms.

The phosphorus content in the metal acid compound dispersion of the present invention is calculated by appropriately diluting the dispersion with dilute hydrochloric acid as necessary, and measuring P mass% in terms of P atoms in accordance with JIS K0116:2014 using ICP emission spectrometry (manufactured by Agilent Technologies, Inc.: AG-5110).

In addition, the phosphorus content in the metal acid compound dispersion of the present invention is preferably analyzed by the ICP emission spectrometry described above, but can also be determined by measuring a ³¹P-NMR spectrum. Specifically, the phosphorus content in the metal acid compound dispersion of the present invention can be determined by the following procedure using a nuclear magnetic resonance apparatus (AVANCE NEO 600 manufactured by Bruker Corporation). 70 µL of the metal acid compound dispersion of the present invention and 650 µL of a deuterated water solution of phosphonoacetic acid obtained by dissolving 10 g/L of phosphonoacetic acid in deuterated water are mixed to prepare a measurement sample. The adjusted measurement sample is subjected to ³¹P-NMR spectrum measurement according to the following ³¹P-NMR spectrum measurement conditions.

### = ³¹P-NMR spectrum measurement conditions =

- Magnetic field: 14.1 T (1H 600 Mhz)
- Spectroscope: AVANCE NEO 600 manufactured by Bruker Corporation
- Measurement and data processing software: TopSpin manufactured by Bruker Corporation
- NMR probe: solvent probe (type: PA BBO 600S3 BBF-H-D-05 Z SP)
- Solvent: deuterated water
- Internal sample of chemical shift value and phosphorus content: phosphonoacetic acid
- Standard of chemical shift value: The top of the central peak of the triplet peak of phosphonoacetic acid is set to 14.96 ppm.
- Spectrum center (O1 value - SR value (chemical shift value)): 0.00 ppm
- Radio wave pulse intensity: The intensity is set to an intensity at which 14 µs is a 90 degree pulse with respect to the peak of the irradiation center.
- Radio wave pulse width: 14 µs
- Measurement interval: 80 µs (DW = 40 µs on the software)
- Number of measurement points: 32768 points (TD = 65536 on the software)
- Number of spectral points (SI on the software): 65536 points

By performing Fourier transform on the FID data measured under the above-described ³¹P-NMR spectrum measurement conditions without using a window function, a ³¹P-NMR spectrum is obtained. The peak area of the obtained ³¹P-NMR spectrum is calculated using the measurement and the Integrate function of the data processing software described above, and the contents of phosphonoacetic acid and phosphate ions can be calculated from the peak area. For example, in the diphosphoric acid raw material, a ³¹P peak is observed at 6.5 ppm (estimated to be derived from PO₄ from the chemical shift value) and -1.7 ppm (estimated to be derived from P₂O₇ from the chemical shift value). In the phosphoric acid raw material, a ³¹P peak is observed at 6.2 ppm (estimated to be derived from PO₄). Since the chemical shift is shifted depending on the pH of the sample or the like, the calculation is performed in consideration.

Moreover, in the metal acid compound dispersion of the present invention, the chlorine content in the metal acid compound dispersion is preferably 0.0 mass% or more and 2.0 mass% or less in terms of Cl atoms.

When the chlorine content in the metal acid compound dispersion of the present invention is 0.0 mass% or more and 2.0 mass% or less in terms of Cl atoms, it is preferable from the viewpoint of concern about corrosion of the substrate. Also, the chlorine content is more preferably 0.001 mass% or more and 2.0 mass% or less in terms of Cl atoms, still more preferably 0.001 mass% or more and 0.5 mass% or less in terms of Cl atoms, particularly preferably 0.001 mass% or more and 0.2 mass% or less in terms of Cl atoms, and more particularly preferably 0.001 mass% or more and 0.1 mass% or less in terms of Cl atoms.

The chlorine content in the metal acid compound dispersion of the present invention is calculated by appropriately diluting the dispersion with dilute hydrochloric acid as necessary, and measuring Cl mass% in terms of Cl atoms in accordance with JIS K0116:2014 using ICP emission spectrometry (manufactured by Agilent Technologies, Inc.: AG-5110). At this time, the chlorine content in the metal acid compound dispersion of the present invention can be determined by subtracting the chlorine content derived from dilute hydrochloric acid used for dilution.

Furthermore, in the metal acid compound dispersion of the present invention, the total content of the phosphorus content in terms of P atoms and the chlorine content in terms of Cl atoms in the metal acid compound dispersion is preferably 0.01 mass% or more and 10 mass% or less.

When the total content in the metal acid compound dispersion of the present invention is 0.01 mass% or more and 10 mass% or less, it is preferable from the viewpoint of improving the dispersibility and solubility in a polar solvent, particularly water. In addition, the total content is more preferably 0.01 mass% or more and 5 mass% or less, still more preferably 0.05 mass% or more and 2 mass% or less, and particularly preferably 0.05 mass% or more and 1 mass% or less.

In the metal acid compound dispersion of the present invention, a molar ratio x/m of a total amount of element X (x) and a total amount of metal species M (m) in the metal acid compound dispersion is 0.01 or more and 10 or less.

The molar ratio x/m of the total amount of element X (x) and the total amount of metal species M (m) in the metal acid compound dispersion of the present invention is preferably 0.01 or more and 10 or less from the viewpoint of improving the dispersibility and solubility in water, more preferably 0.05 or more and 9 or less, still more preferably 0.1 or more and 8 or less, and particularly preferably 1 or more and 7 or less. The molar ratio x/m of the total amount of element X (x) and the total amount of metal species M (m) in the metal acid compound dispersion of the present invention may be 0.1 or more and 9 or less, or 0.1 or more and 7 or less.

The total amount of metal species M (m) can be determined as follows.

When the metal species M contained in the metal acid compound dispersion of the present invention is two, tantalum and niobium, the sum of the number of moles of tantalum and the number of moles of niobium per 1 L of the metal acid compound dispersion of the present invention is the total amount of metal species M (m) in the metal acid compound dispersion of the present invention.

When the metal species M contained in the metal acid compound dispersion of the present invention is three, tantalum, niobium, and molybdenum, the sum of the number of moles of tantalum, the number of moles of niobium, and the number of moles of molybdenum per 1 L of the metal acid compound dispersion of the present invention is the total amount of metal species M (m) in the metal acid compound dispersion of the present invention.

When the metal species M contained in the metal acid compound dispersion of the present invention is four, tantalum, molybdenum, tungsten, and titanium, the sum of the number of moles of tantalum, the number of moles of molybdenum, the number of moles of tungsten, and the number of moles of titanium per 1 L of the metal acid compound dispersion of the present invention is the total amount of metal species M (m) in the metal acid compound dispersion of the present invention.

When the metal species M contained in the metal acid compound dispersion of the present invention is five, tantalum, niobium, molybdenum, tungsten, and titanium, the sum of the number of moles of tantalum, the number of moles of niobium, the number of moles of molybdenum, the number of moles of tungsten, and the number of moles of titanium per 1 L of the metal acid compound dispersion of the present invention is the total amount of metal species M (m) in the metal acid compound dispersion of the present invention.

Also, in the metal acid compound dispersion of the present invention, the element X in the metal acid compound dispersion is Li, and a molar ratio Li/m of lithium (Li) and a total amount of metal species M (m) is 0.01 or more and 10 or less.

The element X in the metal acid compound dispersion of the present invention is Li and the molar ratio Li/m of lithium (Li) and the total amount of metal species M (m) is preferably 0.01 or more and 10 or less from the viewpoint of improving the dispersibility and solubility in water, more preferably 0.05 or more and 9 or less, still more preferably 0.1 or more and 8 or less, and particularly preferably 1 or more and 7 or less. The element X in the metal acid compound dispersion of the present invention is Li, and the molar ratio Li/m of lithium (Li) and the total amount of metal species M (m) may be 0.1 or more and 9 or less, or 0.1 or more and 7 or less.

Further, in the metal acid compound dispersion of the present invention, a molar ratio x/(P + Cl) of a total amount of element X (x) and a total amount of the phosphorus compound and/or the chlorine compound (P + Cl) in the metal acid compound dispersion is 0.01 or more and 5 or less.

The molar ratio x/(P + Cl) of the total amount of element X (x) and the total amount of the phosphorus compound and/or the chlorine compound (P + Cl) in the metal acid compound dispersion of the present invention is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less. In the present specification, unless otherwise specified, the total amount of the phosphorus compound and/or the chlorine compound (P + Cl) is the sum of a value determined in terms of P atoms (P) and a value determined in terms of Cl atoms (Cl). In addition, the total amount of the phosphorus compound and/or the chlorine compound (P + Cl) is preferably Cl = 0 when the metal acid compound dispersion of the present invention is used for covering a positive electrode or a positive electrode material for a lithium ion secondary battery described later.

Furthermore, in the metal acid compound dispersion of the present invention, a molar ratio x/P of the total amount of element X (x) and the total amount of the phosphorus compound (P) in the metal acid compound dispersion is more preferably 0.01 or more and 5 or less.

The molar ratio x/P of the total amount of element X (x) and the total amount of the phosphorus compound (P) in the metal acid compound dispersion of the present invention is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Also, in the metal acid compound dispersion of the present invention, a molar ratio x/(P + Cl) of a total amount of element X (x) and a total amount of the phosphorus compound and/or the chlorine compound (P + Cl) in the metal acid compound dispersion is 0.01 or more and 5 or less.

The molar ratio x/(P + Cl) of the total amount of element X (x) and the total amount of the phosphorus compound and/or the chlorine compound (P + Cl) in the metal acid compound dispersion of the present invention is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Moreover, in the metal acid compound dispersion of the present invention, the molar ratio x/P of the total amount of element X (x) and the total amount of the phosphorus compound (P) in the metal acid compound dispersion is more preferably 0.01 or more and 5 or less.

The molar ratio x/P of the total amount of element X (x) and the total amount of the phosphorus compound (P) in the metal acid compound dispersion of the present invention is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Further, in the metal acid compound dispersion of the present invention, the element X in the metal acid compound dispersion is Li, and a molar ratio Li/(P + Cl) of lithium (Li) and a total amount of the phosphorus compound and/or the chlorine compound (P + Cl) is 0.01 or more and 5 or less.

The element X in the metal acid compound dispersion of the present invention is Li and the molar ratio Li/(P + Cl) of lithium (Li) and the total amount of the phosphorus compound and/or the chlorine compound (P + Cl) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Furthermore, in the metal acid compound dispersion of the present invention, the element X in the metal acid compound dispersion is Li, and the molar ratio Li/P of lithium (Li) and the total amount of the phosphorus compound (P) is more preferably 0.01 or more and 5 or less.

The element X in the metal acid compound dispersion of the present invention is Li and the molar ratio Li/P of lithium (Li) and the total amount of the phosphorus compound (P) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Also, in the metal acid compound dispersion of the present invention, a molar ratio m/(P + Cl) of a total amount of metal species M (m) and a total amount of the phosphorus compound and/or the chlorine compound (P + Cl) is 0.01 or more and 10 or less.

The molar ratio m/(P + Cl) of the total amount of metal species M (m) and the total amount of the phosphorus compound and/or the chlorine compound (P + Cl) in the metal acid compound dispersion of the present invention is preferably 0.01 or more and 10 or less from the viewpoint of improving the dispersibility and solubility in water, more preferably 0.05 or more and 5 or less, still more preferably 0.1 or more and 3 or less, and particularly preferably 0.1 or more and 1.95 or less.

Further, in the metal acid compound dispersion of the present invention, a molar ratio m/P of the total amount of metal species M (m) and the total amount of the phosphorus compound (P) is more preferably 0.01 or more and 10 or less.

The molar ratio m/P of the total amount of metal species M (m) and the total amount of the phosphorus compound (P) in the metal acid compound dispersion of the present invention is preferably 0.01 or more and 10 or less from the viewpoint of improving the dispersibility and solubility in water, more preferably 0.05 or more and 5 or less, still more preferably 0.1 or more and 3 or less, and particularly preferably 0.1 or more and 1.95 or less.

Moreover, in the metal acid compound dispersion of the present invention, when the metal species M in the metal acid compound dispersion is Nb, a molar ratio Nb/(P + Cl) of niobium (Nb) and the total amount of the phosphorus compound and/or the chlorine compound (P + Cl) is preferably 0.01 or more and 10 or less, more preferably 0.05 or more and 5 or less, still more preferably 0.1 or more and 3 or less, and particularly preferably 0.1 or more and 1.95 or less.

Furthermore, in the metal acid compound dispersion of the present invention, when the metal species M in the metal acid compound dispersion is Nb, a molar ratio Nb/P of niobium (Nb) and the total amount of the phosphorus compound (P) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is Ta, a molar ratio Ta/(P + Cl) of tantalum (Ta) and the total amount of the phosphorus compound and/or the chlorine compound (P + Cl) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is Ta, a molar ratio Ta/P of tantalum (Ta) and the total amount of the phosphorus compound (P) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is Mo, a molar ratio Mo/(P + Cl) of molybdenum (Mo) and the total amount of the phosphorus compound and/or the chlorine compound (P + Cl) is preferably 0.01 or more and 10 or less, more preferably 0.05 or more and 5 or less, still more preferably 0.1 or more and 3 or less, and particularly preferably 0.1 or more and 1.95 or less.

Further, in the metal acid compound dispersion of the present invention, when the metal species M in the metal acid compound dispersion is Mo, a molar ratio Mo/P of molybdenum (Mo) and the total amount of the phosphorus compound (P) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is W, a molar ratio W/(P + Cl) of tungsten (W) and the total amount of the phosphorus compound and/or the chlorine compound (P + Cl) is preferably 0.01 or more and 10 or less, more preferably 0.05 or more and 5 or less, still more preferably 0.1 or more and 3 or less, and particularly preferably 0.1 or more and 1.95 or less.

Furthermore, in the metal acid compound dispersion of the present invention, when the metal species M in the metal acid compound dispersion is W, a molar ratio W/P of tungsten (W) and the total amount of the phosphorus compound (P) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is Ti, a molar ratio Ti/(P + Cl) of titanium (Ti) and the total amount of the phosphorus compound and/or the chlorine compound (P + Cl) is preferably 0.01 or more and 10 or less, more preferably 0.05 or more and 5 or less, still more preferably 0.1 or more and 3 or less, and particularly preferably 0.1 or more and 1.95 or less.

In the metal acid compound dispersion of the present invention, when the metal species M in the metal acid compound dispersion is Ti, a molar ratio Ti/P of titanium (Ti) and the total amount of the phosphorus compound (P) is preferably 0.01 or more and 10 or less, more preferably 0.05 or more and 5 or less, still more preferably 0.1 or more and 3 or less, and particularly preferably 0.1 or more and 1.95 or less.

In addition, the metal acid compound dispersion of the present invention is an aqueous dispersion.

Since the metal acid compound in the metal acid compound dispersion of the present invention has high dispersibility in water and good solubility in water, pure water can be used as a solvent. As the solvent, an organic solvent may be used. Examples of the organic solvent include alcohol solvents, ketone solvents, ether solvents, ester solvents, aromatic hydrocarbon solvents, and aliphatic hydrocarbon solvent, and a solvent obtained by mixing these organic solvents with pure water may be used. Also, examples of the alcohol solvent include alcohols having 5 or less carbon atoms (methanol, ethanol, n-propanol, isopropyl alcohol, butanol, ethylene glycol, propylene glycol), high boiling point solvents, and acetone. The above-described solvents and water are preferably compatible. In addition, the metal acid compound dispersion of the present invention may contain one or more solvents at an arbitrary ratio as long as the stability is not inhibited.

Examples of the high boiling point solvent include polyhydric alcohol-based solvents and glycol-based solvents. Examples of the polyhydric alcohol-based solvent include glycerin (boiling point: 290°C), 1,6-hexanediol (boiling point: 250°C), and 1,7-heptanediol (boiling point: 259°C). Also, examples of the glycol-based solvent include ethylene glycol (boiling point: 197.3°C), propylene glycol (boiling point: 188.2°C), diethylene glycol (boiling point: 244.3°C), triethylene glycol (boiling point: 287.4°C), oligoethylene glycol (boiling point: 287°C to 460°C), polyethylene glycol (PEG) (boiling point: 460°C or higher), polyethylene glycol (PEG)-polypropylene glycol (PPG) copolymer (boiling point: 460°C or higher), diethylene glycol monohexyl ether (boiling point: 260°C), polyoxyalkylene monoalkyl ether (boiling point: 260°C or higher), polyoxyethylene sorbitan monolaurate (boiling point: 321°C or higher), other anionic fluorine-based surfactants (boiling point: 180°C or higher), amphoteric fluorine-based surfactants (boiling point: 180°C or higher), nonionic fluorine-based surfactants (boiling point: 180°C or higher), and amine oxide (boiling point: 180°C or higher). The above-described boiling point is a boiling point at 1 atm.

Further, in the metal acid compound dispersion of the present invention, the pH of the metal acid compound dispersion is 2 or more and 11 or less.

When the pH of the metal acid compound dispersion of the present invention is 2 or more and 11 or less, polyacid ions contained in the dispersion are preferably stabilized. In addition, as the metal acid compound dispersion of the present invention, there are cases where an acidic metal acid compound dispersion is preferable, cases where a neutral metal acid compound dispersion is preferable, and cases where a basic metal acid compound dispersion is preferable, depending on the use. In the present specification, unless otherwise specified, the "pH" refers to both an "initial pH" which is the pH of the metal acid compound dispersion of the present invention adjusted to a liquid temperature of 25°C immediately after being generated, and a "temporal pH" which is the pH of the metal acid compound dispersion after being left to stand in a thermostat set at a room temperature of 25°C for 1 month from the day on which the metal acid compound dispersion of the present invention was generated.

When an acidic metal acid compound dispersion is preferable, the pH of the metal acid compound dispersion of the present invention is preferably less than 7, and preferably 2 or more and less than 7. Also, when a neutral metal acid compound dispersion is preferable, the pH of the metal acid compound dispersion of the present invention is preferably 6 or more and 8 or less, and more preferably 7. Further, when a basic metal acid compound dispersion is preferable, the pH of the metal acid compound dispersion of the present invention is preferably 7 or more, more preferably 8 or more, still more preferably 9 or more, and particularly preferably 10 or more. On the other hand, the pH is preferably 11 or less. Further, the pH may be 11 or more or 12 or more. Incidentally, it is preferable that an organic acid is not contained in the metal acid compound dispersion of the present invention also in that when the organic acid is contained in the metal acid compound dispersion of the present invention, the pH is changed, and the component in the metal acid compound dispersion of the present invention and the organic acid can interact with each other.

Here, the pH of the metal acid compound dispersion of the present invention is measured after immersing an electrode (manufactured by HORIBA, Ltd.: standard ToupH electrode 9615S-10D) of a pH meter (manufactured by HORIBA, Ltd.: glass electrode-type hydrogen ion concentration indicator D-51) in the metal acid compound dispersion of the present invention and confirming that the liquid temperature has stabilized at 25°C.

In addition, the metal acid compound dispersion of the present invention may contain an element that does not constitute the metal acid compound contained in the metal acid compound dispersion of the present invention or a compound thereof as an additive. Examples of the additive include elements such as Al, Si, V, Mn, Fe, Co, Ni, Cu, Zn, Ge, Zr, Sn, and La, and compounds. Here, examples of the compound include oxides, metal acid alkali metal salts, metal acid alkaline earth metal salts, chlorides, metal acid alkoxides, and polyoxometalates. In addition, regarding the content of the additive in the metal acid compound dispersion of the present invention, when the total content mol number of each element as an additive is Z, a molar ratio Z/m of the total content mol number of each element as an additive (Z) to the total amount of metal species M (m) may be 0.001 to 75, 0.002 to 50, 0.01 to 40, 0.2 to 30, 0.5 to 25, 0.8 to 1.5, 0.8 to 1.3, 0.9 to 1.2, or 0.9 to 1.1. The content of each element corresponding to the additive is calculated by measuring the mass% of each element in terms of each element atom similarly to the content of metal species M described above. Furthermore, since the metal acid compound dispersion of the present invention is a uniform dispersion, improvement in uniformity and improvement in reactivity (reaction rate) are expected even when these compounds are in a suspension state. Also, when these compounds are dissolved in the metal acid compound dispersion of the present invention to form a uniform dispersion, the complexing element can have the most favorable reactivity.

Further, the metal acid compound dispersion of the present invention may contain components other than the components derived from the metal or the metal acid, ammonia, the organic nitrogen compound, and components derived from the element X (referred to as "other components".) as long as the action and effect thereof are not inhibited. Examples of other components include Al, Si, V, Mn, Fe, Co, Ni, Cu, Zn, Ge, Zr, Sn, and La. However, the present invention is not limited thereto. The content of other components is preferably 5 mass% or less, more preferably 4 mass% or less, and still more preferably 3 mass% or less with respect to 100 mass% of the metal acid compound dispersion of the present invention. The content of each element corresponding to the other component is calculated by measuring the mass% of each element in terms of each element atom similarly to the content of metal species M described above. Incidentally, the metal acid compound dispersion of the present invention is assumed to unintentionally contain inevitable impurities. The content of the inevitable impurities is preferably 0.01 mass% or less.

A metal acid compound powder of the present invention contains the metal acid compound in the metal acid compound dispersion of the present invention described above.

The metal acid compound powder of the present invention includes a dry powder obtained by drying, for example, vacuum drying, the metal acid compound dispersion of the present invention and a fired powder obtained by firing the obtained dry powder. In addition, the metal acid compound powder of the present invention also includes metal acid compound powders having different physical properties such as crystal structure, which are generated by vacuum drying or firing the metal acid compound dispersion of the present invention, and may have an amorphous structure, a single crystal structure, or a polycrystalline structure. A method for producing the metal acid compound powder of the present invention will be described later.

A metal acid compound film of the present invention contains the metal acid compound in the metal acid compound dispersion of the present invention described above.

The metal acid compound film of the present invention includes a dried film obtained by applying the metal acid compound dispersion of the present invention to a surface of a substrate and then drying, for example, vacuum drying, and a fired film obtained by firing the obtained dried film. In addition, the metal acid compound film of the present invention also includes metal acid compound films having different physical properties such as crystal structure, which are generated by vacuum drying or firing the metal acid compound dispersion of the present invention, and may have an amorphous structure, a single crystal structure, or a polycrystalline structure. Since the metal compound which is a raw material of the metal acid compound film of the present invention has high chemical resistance, the surface of the substrate is covered with the metal acid compound film of the present invention, whereby the high-temperature characteristics (for example, protection of the substrate from deterioration due to heat) and chemical resistance of the substrate can be improved. A method for producing the metal acid compound film of the present invention will be described later.

A coating agent of the present invention contains the metal acid compound dispersion of the present invention described above.

The coating agent of the present invention contains the metal acid compound dispersion of the present invention which has high dispersibility in water, good solubility in water, and excellent storage stability.

In addition, the coating agent of the present invention contains the metal acid compound powder of the present invention described above.

The coating agent of the present invention contains the metal acid compound powder of the present invention which has high dispersibility in water, good solubility in water, and excellent storage stability.

Moreover, the metal acid compound dispersion of the present invention is used for covering a positive electrode or a positive electrode material for a lithium ion secondary battery.

The metal acid compound dispersion of the present invention can also be used for covering a positive electrode or a positive electrode material for a lithium ion secondary battery.

Further, a positive electrode active material for a lithium ion secondary battery of the present invention is characterized in that a surface is covered with the metal acid compound contained in the metal acid compound dispersion of the present invention described above.

Here, as the positive electrode active material for a lithium ion secondary battery, specifically, LiMn₂O₄ (manufactured by Merck Corporation: spinel type, particle size < 0.5 µm), LiCoO₂, LiNiO₂, LiFeO₂, Li₂MnO₃, LiFePO₄, LiCoPO₄, LiNiPO₄, LiMnPO₄, LiNi_{0.5}Mn_{1.5}O₄, LiMn_{1/3}Co_{1/3}Ni_{1/3}O₂, LiCo_{0.2}Ni_{0.4}Mn_{0.4}O₂, lithium molybdate, LiMnO₄, LiNi_{0.8}Co_{0.15}Al_{0.05}O₂, LiMnO₂, or the like can be used.

Furthermore, a lithium ion secondary battery of the present invention has a positive electrode whose surface is covered with the positive electrode active material for a lithium ion secondary battery of the present invention described above.

A method for producing the metal acid compound dispersion of the present invention described above will be described below.

The method for producing the metal acid compound dispersion of the present invention may include a mixing step of mixing a metal compound neutralized aqueous solution containing two or more metal species M selected from the group consisting of niobium, tantalum, molybdenum, tungsten, and titanium with a phosphorus compound or a phosphorus compound solution, and/or a chlorine compound or a chlorine compound solution.

Specifically, a phosphorus compound or a phosphorus compound solution, and/or a chlorine compound or a chlorine compound solution is added to a metal compound neutralized aqueous solution containing two or more metal species M selected from the group consisting of niobium, tantalum, molybdenum, tungsten, and titanium described later, and the mixture is mixed at room temperature for 0.1 hours to 2 hours, whereby the metal acid compound dispersion of the present invention is obtained.

Here, the phosphorus compound may contain one or more selected from inorganic phosphorus compounds, organic phosphorus compounds, and salts thereof.

Furthermore, the phosphorus compound preferably contains one or more selected from phosphoric acid (CAS number: 7664-38-2), condensed phosphoric acid, pyrophosphoric acid (CAS number: 2466-09-3), polyphosphoric acid (CAS number: 8071-16-1), phosphorous acid (CAS number: 13598-36-2), hypophosphorous acid (CAS number: 6303-21-5), ammonium phosphate, primary ammonium phosphate (CAS number: 7722-76-1), secondary ammonium phosphate (CAS number: 7783-28-0), ammonium pyrophosphate, and ammonium polyphosphate.

Moreover, it may be a phosphorus compound solution obtained by adding pure water to the phosphorus compound described above and adjusting the concentration so that the phosphorus content in the metal acid compound dispersion of the present invention is 0.01 mass% or more and 10 mass% or less in terms of P atoms.

Here, examples of the chlorine compound include hydrochloric acid (CAS number: 7647-01-0), hypochlorous acid (CAS number: 7790-92-3), chlorous acid (CAS number: 13898-47-0), chloric acid (CAS number: 7790-93-4), and perchloric acid (CAS number: 7601-90-3).

In addition, the chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

Moreover, it may be a chlorine compound solution obtained by adding pure water to the chlorine compound described above and adjusting the concentration so that the chlorine content in the metal acid compound dispersion of the present invention is 0.0 mass% or more and 2.0 mass% or less in terms of Cl atoms.

A method for producing the metal compound neutralized aqueous solution containing two or more metal species M selected from the group consisting of niobium, tantalum, molybdenum, tungsten, and titanium used in the method for producing the metal acid compound dispersion of the present invention described above will be described below separately for a niobium compound neutralized aqueous solution, a tantalum compound neutralized aqueous solution, a molybdenum compound neutralized aqueous solution, a tungsten compound neutralized aqueous solution, and a titanium compound neutralized aqueous solution.

A method for producing a niobium compound neutralized aqueous solution includes a reaction step of generating a niobium fluoride aqueous solution, and a neutralization reaction step of adding the niobium fluoride aqueous solution to an alkaline aqueous solution containing one or more elements X selected from the group consisting of alkali metal elements and/or alkaline earth metal elements to generate a niobium compound neutralized aqueous solution.

First, the niobium fluoride aqueous solution can be prepared by reacting niobium, niobium oxide, or niobium hydroxide with hydrofluoric acid (HF) such as a hydrofluoric acid aqueous solution to form niobium fluoride (H₂NbF₇), and dissolving the niobium fluoride in water.

Here, the niobium fluoride aqueous solution is preferably adjusted to contain 1 to 100 g/L of niobium in terms of Nb₂O₅ by adding water (for example, pure water). At this time, the niobium content is preferably 1 g/L or more in terms of Nb₂O₅ since the niobic acid compound hydrate which is easily soluble in water is generated, and in consideration of productivity, the niobium content is more preferably 10 g/L or more, and still more preferably 20 g/L or more. On the other hand, the niobium content is preferably 100 g/L or less in terms of Nb₂O₅ since the niobic acid compound hydrate which is easily soluble in water is generated, and in order to synthesize a niobic acid compound hydrate which is more reliably soluble in water, the niobium content is more preferably 90 g/L or less, still more preferably 80 g/L or less, and particularly preferably 70 g/L or less. The pH of the niobium fluoride aqueous solution is preferably 2 or less, and more preferably 1 or less from the viewpoint of completely dissolving niobium or niobium oxide.

The neutralization reaction step of adding the obtained niobium fluoride aqueous solution to an alkaline aqueous solution containing one or more elements X selected from the group consisting of alkali metal elements and/or alkaline earth metal elements to generate a niobium compound neutralized aqueous solution is as follows.

In the neutralization reaction step, first, a precipitation slurry containing niobium is obtained by adding the obtained niobium fluoride aqueous solution to ammonia water, that is, by a reverse neutralization method. Then, fluoride ions are removed from the obtained precipitation slurry containing niobium, whereby a niobium-containing precipitate from which fluoride ions have been removed is obtained.

The ammonia content of the ammonia water used for the reverse neutralization is preferably 10 mass% to 30 mass%. When the ammonia content is 10 mass%, niobium hardly remains undissolved, and niobium or niobic acid can be completely dissolved in water. On the other hand, the ammonia content is preferably 30 mass% or less since it is in the vicinity of a saturated aqueous solution of ammonia.

From such a viewpoint, the ammonia content of the ammonia water is preferably 10 mass% or more, more preferably 15 mass% or more, still more preferably 20 mass% or more, and particularly preferably 25 mass%. On the other hand, the ammonia content is preferably 30 mass% or less, more preferably 29 mass% or less, and still more preferably 28 mass% or less.

As the addition amount of the niobium fluoride aqueous solution to be added to the ammonia water, a molar ratio of NH₃/Nb₂O₅ is preferably 95 or more and 500 or less, more preferably 100 or more and 450 or less, and still more preferably 110 or more and 400 or less. In addition, from the viewpoint of generating a niobic acid compound soluble in an amine or dilute ammonia water, as the addition amount of the niobium fluoride aqueous solution to be added to the ammonia water, a molar ratio of NH₃/HF is preferably 3.0 or more, more preferably 4.0 or more, and still more preferably 5.0 or more. On the other hand, from the viewpoint of cost reduction, the molar ratio of NH₃/HF is preferably 100 or less, more preferably 50 or more, and still more preferably 40 or more.

The time required for adding the niobium fluoride aqueous solution to the ammonia water is preferably 1 minute or less, more preferably 30 seconds or less, and still more preferably 10 seconds or less. That is, it is preferable that the niobium fluoride aqueous solution is not gradually added over time, but is charged into the ammonia water in as short a time as possible, for example, charged at once, and subjected to a neutralization reaction. Also, in the reverse neutralization step, since an acidic niobium fluoride aqueous solution is added to alkaline ammonia water, the neutralization reaction can be performed while maintaining a high pH. The niobium fluoride aqueous solution and the ammonia water can be used at room temperature.

Then, fluoride ions are removed from the precipitation slurry containing niobium obtained by the reverse neutralization method, and a niobium-containing precipitate from which fluoride ions have been removed can be obtained. Since a fluorine compound such as ammonium fluoride exists as an impurity in the precipitation slurry containing niobium obtained by the reverse neutralization method, it is preferable to remove the fluorine compound.

A method for removing the fluorine compound is arbitrary, and for example, a method by filtration using a membrane such as reverse osmosis filtration, ultrafiltration, or microfiltration using ammonia water or pure water, centrifugation, or other known methods can be adopted. Incidentally, when the fluoride ions are removed from the precipitation slurry containing niobium, temperature adjustment is not particularly necessary, and the removal may be performed at room temperature.

Specifically, the precipitation slurry containing niobium obtained by the reverse neutralization method is decanted using a centrifuge, and washing is repeated until the amount of released fluoride ions reaches 100 mg/L or less, thereby obtaining a niobium-containing precipitate from which fluoride ions have been removed.

A washing liquid used for removing fluoride ions is suitably ammonia water. Specifically, 5.0 mass% or less ammonia water is preferable, 4.0 mass% or less ammonia water is more preferable, 3.0 mass% or less ammonia water is still more preferable, and 2.5 mass% ammonia water is particularly preferable. When 5.0 mass% or less ammonia water is used, ammonia containing ammonium ions is appropriate for fluoride ions, and an unnecessary increase in cost can be avoided.

In this way, the obtained niobium-containing precipitate from which fluoride ions have been removed is diluted with pure water or the like, whereby a niobium-containing precipitation slurry from which fluoride ions have been removed is obtained. The niobium content of the precipitation slurry containing niobium can be determined by collecting a part of the slurry, drying the slurry at 110°C for 24 hours, then firing the slurry at 1,000°C for 4 hours to generate Nb₂O₅, measuring the weight of Nb₂O₅ thus generated, and calculating the niobium content of the slurry from the weight.

Next, in the neutralization reaction step, a niobium-containing precipitation slurry from which the generated fluoride ions have been removed is obtained. Then, a mixture obtained by mixing the niobium-containing precipitation slurry from which fluoride ions have been removed, a hydroxide of the element X, for example, lithium hydroxide monohydrate, and pure water is held at 20°C to 100°C for 0.1 hours to 72 hours while stirring the mixture, whereby a niobium compound neutralized aqueous solution is obtained.

In addition, as another example of the method for producing a niobium compound neutralized aqueous solution, the method may include a reaction step of generating a niobium fluoride aqueous solution, and a neutralization reaction step of adding the niobium fluoride aqueous solution to an alkaline aqueous solution containing an organic nitrogen compound to generate a niobium compound neutralized aqueous solution.

Here, in another example of the method for producing a niobium compound neutralized aqueous solution, the steps until a niobium-containing precipitation slurry from which fluoride ions have been removed is obtained are the same as those in the method for producing a niobium compound neutralized aqueous solution described above, and thus the detailed description thereof will be omitted.

In the same manner as the method for producing a niobium compound neutralized aqueous solution of the present invention described above, a mixture obtained by mixing the obtained niobium-containing precipitation slurry from which fluoride ions have been removed, the organic nitrogen compound, and pure water is held at 5°C to 90°C for 0.1 hours to 48 hours while stirring the mixture, whereby a niobium compound neutralized aqueous solution is obtained.

As described above, the organic nitrogen compound to be mixed with the niobium-containing precipitation slurry is preferably an aliphatic amine, an aromatic amine, an amino alcohol, an amino acid, a polyamine, a quaternary ammonium, a guanidine compound, or an azole compound, and particularly, more preferably an aliphatic amine and/or a quaternary ammonium compound.

From the viewpoint of solubility, the aliphatic amine is mixed so that the content of the aliphatic amine in the niobium-containing precipitation slurry is preferably 40 mass% or less, and more preferably 20 mass% or less. Also, from the same viewpoint, the aliphatic amine is mixed so that the content of the aliphatic amine in the niobium-containing precipitation slurry is preferably 0.1 mass% or more, more preferably 1 mass% or more, and may be 5 mass% or more or 10 mass% or more. The aliphatic amine is more preferably methylamine or dimethylamine.

Furthermore, from the viewpoint of solubility, the quaternary ammonium compound is mixed so that the content of the quaternary ammonium compound in the niobium-containing precipitation slurry is preferably 40 mass% or less, and more preferably 20 mass% or less. Also, from the same viewpoint, the quaternary ammonium compound is mixed so that the content of the quaternary ammonium compound in the niobium-containing precipitation slurry is preferably 0.1 mass% or more, more preferably 1 mass% or more, and may be 5 mass% or more or 10 mass% or more. The quaternary ammonium compound is more preferably tetramethylammonium hydroxide (TMAH) or tetraethylammonium hydroxide (TEAH).

A method for producing a tantalum compound neutralized aqueous solution includes a reaction step of adding hydrogen peroxide to a tantalum fluoride aqueous solution to generate a tantalum compound aqueous solution, and a neutralization reaction step of adding the tantalum compound aqueous solution to an alkaline aqueous solution containing one or more elements X selected from the group consisting of alkali metal elements and/or alkaline earth metal elements to generate a tantalum compound neutralized aqueous solution.

First, the tantalum fluoride aqueous solution can be prepared by reacting tantalum, tantalum oxide, or tantalum hydroxide with hydrofluoric acid (HF) such as a hydrofluoric acid aqueous solution to form tantalum fluoride (H₂TaF₇), and dissolving the tantalum fluoride in water.

Here, the acidic tantalum solution containing fluoride ions, for example, the tantalum fluoride aqueous solution is preferably adjusted to contain 1 to 100 g/L of tantalum in terms of Ta₂O₅ by adding water (for example, pure water). At this time, the tantalum content is preferably 1 g/L or more in terms of Ta₂O₅ since the tantalic acid compound hydrate which is easily soluble in water is generated, and in consideration of productivity, the tantalum content is more preferably 10 g/L or more, and still more preferably 20 g/L or more. On the other hand, the tantalum content is preferably 100 g/L or less in terms of Ta₂O₅ since the tantalic acid compound hydrate which is easily soluble in water is generated, and in order to synthesize a tantalic acid compound hydrate which is more reliably soluble in water, the tantalum content is more preferably 90 g/L or less, still more preferably 80 g/L or less, and particularly preferably 70 g/L or less. The pH of the tantalum fluoride aqueous solution is preferably 2 or less, and more preferably 1 or less from the viewpoint of completely dissolving tantalum or tantalum oxide.

Next, in the reaction step of adding hydrogen peroxide to the tantalum fluoride aqueous solution to generate a tantalum compound aqueous solution, hydrogen peroxide water is added to the tantalum fluoride aqueous solution, and the mixture is mixed, whereby the tantalum compound aqueous solution is obtained. It is presumed that at least a part of the obtained tantalum compound aqueous solution forms a peroxo complex.

Here, the hydrogen peroxide content of the hydrogen peroxide water added to the tantalum fluoride aqueous solution is preferably 0.5 mass% to 35 mass%. Also, hydrogen peroxide is added so that a molar ratio H₂O₂/Ta of hydrogen peroxide and tantalum is preferably 0.6 or more and 1.5 or less, and more preferably 0.7 or more and 1.2 or less since hydrogen peroxide may be decomposed during mixing.

The neutralization reaction step of adding the obtained tantalum compound aqueous solution to an alkaline aqueous solution containing one or more elements X selected from the group consisting of alkali metal elements and/or alkaline earth metal elements to generate a tantalum compound neutralized aqueous solution is as follows.

In the neutralization reaction step, first, a precipitation slurry containing tantalum is obtained by adding the obtained tantalum compound aqueous solution to ammonia water, that is, by a reverse neutralization method. Then, fluoride ions are removed from the obtained precipitation slurry containing tantalum, whereby a tantalum-containing precipitate from which fluoride ions have been removed is obtained.

The ammonia content of the ammonia water used for the reverse neutralization is preferably 10 mass% to 30 mass%. When the ammonia content is 10 mass%, tantalum hardly remains undissolved, and tantalum or tantalic acid can be completely dissolved in water. On the other hand, the ammonia content is preferably 30 mass% or less since it is in the vicinity of a saturated aqueous solution of ammonia.

From such a viewpoint, the ammonia content of the ammonia water is preferably 10 mass% or more, more preferably 15 mass% or more, still more preferably 20 mass% or more, and particularly preferably 25 mass% or more. On the other hand, the ammonia content is preferably 30 mass% or less, more preferably 29 mass% or less, and still more preferably 28 mass% or less.

As the addition amount of the tantalum fluoride aqueous solution to be added to the ammonia water, a molar ratio of NH₃/Ta is preferably 95 or more and 500 or less, more preferably 100 or more and 450 or less, and still more preferably 110 or more and 400 or less. In addition, from the viewpoint of generating a tantalic acid compound soluble in an amine or dilute ammonia water, as the addition amount of the tantalum fluoride aqueous solution to be added to the ammonia water, a molar ratio of NH₃/HF is preferably 3.0 or more, more preferably 4.0 or more, and still more preferably 5.0 or more. On the other hand, from the viewpoint of cost reduction, the molar ratio of NH₃/HF is preferably 100 or less, more preferably 50 or less, and still more preferably 40 or less.

The time required for adding the tantalum fluoride aqueous solution to the ammonia water is preferably 10 minutes or less, more preferably 8 minutes or less, and still more preferably 5 minutes or less. That is, it is preferable that the tantalum fluoride aqueous solution is not gradually added over time, but is charged into the ammonia water in as short a time as possible, for example, charged at once, and subjected to a neutralization reaction. Also, since an acidic tantalum fluoride aqueous solution is added to alkaline ammonia water, the neutralization reaction can be performed while maintaining a high pH. The tantalum fluoride aqueous solution and the ammonia water can be used at room temperature.

Then, fluoride ions are removed from the precipitation slurry containing tantalum obtained by the reverse neutralization method, whereby a tantalum-containing precipitate from which fluoride ions have been removed can be obtained. Since a fluorine compound such as ammonium fluoride exists as an impurity in the precipitation slurry containing tantalum obtained by the reverse neutralization method, it is preferable to remove the fluorine compound.

A method for removing the fluorine compound is arbitrary, and for example, a method by filtration using a membrane such as reverse osmosis filtration, ultrafiltration, or microfiltration using ammonia water or pure water, centrifugation, or other known methods can be adopted. Incidentally, when the fluoride ions are removed from the precipitation slurry containing tantalum, temperature adjustment is not particularly necessary, and the removal can be performed at room temperature.

Specifically, the precipitation slurry containing tantalum obtained by the reverse neutralization method is decanted using a centrifuge, and washing is repeated until the amount of released fluoride ions reaches 100 mg/L or less, thereby obtaining a tantalum-containing precipitate from which fluoride ions have been removed. By repeating the washing, the hydrogen peroxide added in the reaction step is also removed.

A washing liquid used for removing fluoride ions is suitably ammonia water. Specifically, 1 mass% or more and 35 mass% or less ammonia water is preferable. With such ammonia water, ammonia is appropriate for fluoride ions, and an unnecessary increase in cost can be avoided.

Next, in the neutralization reaction step, a tantalum-containing precipitate from which the generated fluoride ions have been removed is diluted with pure water or the like, whereby a tantalum-containing precipitation slurry from which fluoride ions have been removed is obtained. Then, a mixture obtained by mixing the tantalum-containing precipitation slurry from which the fluoride ions have been removed, a hydroxide of the element X, for example, lithium hydroxide monohydrate, and pure water is held at 5°C to 100°C for 0.1 hours to 72 hours while stirring the mixture, whereby a tantalum compound neutralized aqueous solution is obtained.

In addition, as another example of the method for producing a tantalum compound neutralized aqueous solution, the method may include a reaction step of adding hydrogen peroxide to a tantalum fluoride aqueous solution to generate a tantalum compound aqueous solution, and a neutralization reaction step of adding the tantalum compound aqueous solution to an alkaline aqueous solution containing an organic nitrogen compound to generate a tantalum compound neutralized aqueous solution.

Here, in another example of the method for producing a tantalum compound neutralized aqueous solution, the steps until a tantalum-containing precipitation slurry from which fluoride ions have been removed is obtained are the same as those in the method for producing a tantalum compound neutralized aqueous solution described above, and thus the detailed description thereof will be omitted.

In the same manner as the method for producing a tantalum compound neutralized aqueous solution of the present invention described above, a mixture obtained by mixing the obtained tantalum-containing precipitation slurry from which fluoride ions have been removed, the organic nitrogen compound, and pure water is held at 5°C to 90°C for 0.1 hours to 48 hours while stirring the mixture, whereby a tantalum compound neutralized aqueous solution is obtained.

As described above, the organic nitrogen compound to be mixed with the tantalum-containing precipitation slurry is preferably an aliphatic amine, an aromatic amine, an amino alcohol, an amino acid, a polyamine, a quaternary ammonium, a guanidine compound, or an azole compound, and particularly, more preferably an aliphatic amine and/or a quaternary ammonium compound.

From the viewpoint of solubility, the aliphatic amine is mixed so that the content of the aliphatic amine in the tantalum-containing precipitation slurry is preferably 40 mass% or less, and more preferably 20 mass% or less. Also, from the same viewpoint, the aliphatic amine is mixed so that the content of the aliphatic amine in the tantalum-containing precipitation slurry is preferably 0.1 mass% or more, more preferably 1 mass% or more, and may be 5 mass% or more or 10 mass% or more. The aliphatic amine is more preferably methylamine or dimethylamine.

Furthermore, from the viewpoint of solubility, the quaternary ammonium compound is mixed so that the content of the quaternary ammonium compound in the tantalum-containing precipitation slurry is preferably 40 mass% or less, and more preferably 20 mass% or less. Also, from the same viewpoint, the quaternary ammonium compound is mixed so that the content of the quaternary ammonium compound in the tantalum-containing precipitation slurry is preferably 0.1 mass% or more, more preferably 1 mass% or more, and may be 5 mass% or more or 10 mass% or more. The quaternary ammonium compound is more preferably tetramethylammonium hydroxide (TMAH) or tetraethylammonium hydroxide (TEAH).

As the molybdenum compound neutralized aqueous solution, commercially available lithium molybdate dissolved in pure water can be used.

Specifically, lithium molybdate and pure water are mixed so that the molybdenum content of the final mixture is 0.001 mass% or more and 22 mass% or less in terms of Mo atoms and the molar ratio Li/Mo of lithium and molybdenum is 0.001 or more and 5 or less, and the liquid temperature is held at 25°C for 1 hour while stirring the mixture, whereby a molybdenum compound neutralized aqueous solution is obtained. Also, when lithium molybdate and pure water are mixed, lithium hydroxide may be added. Furthermore, in order to remove the ammonia component contained in the obtained molybdenum compound neutralized aqueous solution, the following concentration adjusting step may be performed. In the concentration adjusting step, for example, the molybdenum compound neutralized aqueous solution is heated and stirred at 60°C to 90°C for 1 hour to 100 hours, and then cooled to room temperature. Thereafter, a solvent (pure water or the like) is added in order to replenish the evaporated solvent (pure water or the like). The addition amount of the solvent is adjusted so that the molybdenum content in the molybdenum compound neutralized aqueous solution after removing the ammonia component matches the molybdenum content of the molybdenum compound neutralized aqueous solution before removing the ammonia component.

The method for producing a tungsten compound neutralized aqueous solution includes a step of obtaining a tungsten compound neutralized aqueous solution by holding a mixture obtained by mixing ammonium paratungstate with an alkaline aqueous solution containing one or more elements X selected from the group consisting of alkali metal elements and/or alkaline earth metal elements and pure water at 20°C to 100°C while stirring the mixture.

A mixture obtained by mixing ammonium paratungstate, ammonium paratungstate, lithium hydroxide monohydrate, which is an alkaline aqueous solution containing one or more elements X selected from the group consisting of alkali metal elements and/or alkaline earth metal elements, and pure water is held at 15°C to 100°C for 5 minutes to 1 hour while stirring the mixture, whereby a tungsten compound neutralized aqueous solution is obtained. Also, in order to remove the ammonia component contained in the obtained tungsten compound neutralized aqueous solution, the following concentration adjusting step may be performed. In the concentration adjusting step, for example, the tungsten compound neutralized aqueous solution is heated and stirred at 60°C to 90°C for 1 hour to 100 hours, and then cooled to room temperature. Thereafter, a solvent (pure water or the like) is added in order to replenish the evaporated solvent (pure water or the like). The addition amount of the solvent is adjusted so that the tungsten content in the tungsten compound neutralized aqueous solution after removing the ammonia component matches the tungsten content of the tungsten compound neutralized aqueous solution before removing the ammonia component.

In addition, as another example of the method for producing a tungsten compound neutralized aqueous solution, there is a production method including a step of adding an acidic tungsten aqueous solution containing 1 to 100 g/L of tungsten in terms of WO₃ to a 10 to 30 mass% ammonia aqueous solution to generate a tungsten-containing precipitate, a step of adding an organic nitrogen compound to a tungsten-containing precipitation slurry obtained by slurrying the tungsten-containing precipitate to generate a tungstic acid dispersion, and a step of adding lithium hydroxide and pure water to the tungstic acid dispersion to generate a tungsten compound neutralized aqueous solution.

Specifically, in the step of adding an acidic tungsten aqueous solution containing 1 to 100 g/L of tungsten in terms of WO₃ to a 10 to 30 mass% ammonia aqueous solution to generate a tungsten-containing precipitate, the acidic tungsten aqueous solution refers to a tungsten sulfate aqueous solution obtained by solvent extraction of a solution in which tungsten is dissolved in an acidic aqueous solution containing sulfuric acid.

Here, the tungsten sulfate aqueous solution is preferably adjusted to contain 1 to 100 g/L of tungsten in terms of WO₃ by adding water (for example, pure water). At this time, when the tungsten content is preferably 1 g/L or more in terms of WO₃ since the tungstic acid compound hydrate which is easily soluble in water is generated, and in consideration of productivity, the tungsten content is more preferably 10 g/L or more, and still more preferably 20 g/L or more. On the other hand, the tungsten content is preferably 100 g/L or less in terms of WO₃ since the tungstic acid compound hydrate which is easily soluble in water is generated, and in order to synthesize a tungstic acid compound hydrate which is more reliably soluble in water, the tungsten content is more preferably 90 g/L or less, still more preferably 80 g/L or less, and particularly preferably 70 g/L or less. The pH of the tungsten sulfate aqueous solution is preferably 2 or less, and more preferably 1 or less from the viewpoint of completely dissolving tungsten or tungsten oxide.

When the tungsten sulfate aqueous solution is added to the ammonia aqueous solution, it is preferable to add the tungsten sulfate aqueous solution to the 10 mass% to 30 mass% ammonia aqueous solution in a so-called reverse neutralization method to obtain a tungstic acid compound hydrate slurry, a so-called tungsten-containing precipitate slurry, that is, by a reverse neutralization method.

The ammonia content of the ammonia aqueous solution used for the reverse neutralization is preferably 10 mass% to 30 mass%. When the ammonia content is 10 mass%, tungsten hardly remains undissolved, and tungsten or tungsten oxide can be completely dissolved in water. On the other hand, the ammonia content is preferably 30 mass% or less since it is in the vicinity of a saturated aqueous solution of ammonia.

From such a viewpoint, the ammonia content of the ammonia aqueous solution is preferably 10 mass% or more, more preferably 15 mass% or more, still more preferably 20 mass% or more, and particularly preferably 25 mass%. On the other hand, the ammonia content is preferably 30 mass% or less, more preferably 29 mass% or less, and still more preferably 28 mass% or less.

In the reverse neutralization, a molar ratio of NH₃/WO₃ is preferably 0.1 or more and 300 or less, and more preferably 5 or more and 200 or less as the addition amount of the tungsten sulfate aqueous solution to be added to the ammonia water. In addition, from the viewpoint of generating a tungstic acid compound soluble in an amine or dilute ammonia water, as the addition amount of the tungsten sulfate aqueous solution to be added to the ammonia water, a molar ratio of NH₃/SO₄²⁻ is preferably 3.0 or more, more preferably 10.0 or more, and still more preferably 20.0 or more. On the other hand, from the viewpoint of cost reduction, the molar ratio of NH₃/SO₄²⁻ is preferably 200 or less, more preferably 150 or less, and still more preferably 100 or less.

In the reverse neutralization, the time required for adding the tungsten sulfate aqueous solution to the ammonia water is preferably 1 minute or less, more preferably 30 seconds or less, and still more preferably 10 seconds or less. That is, it is preferable that the tungsten sulfate aqueous solution is not gradually added over time, but is charged into the ammonia water in as short a time as possible, for example, charged at once, and subjected to a neutralization reaction. Also, in the reverse neutralization, since an acidic tungsten sulfate aqueous solution is added to alkaline ammonia water, the neutralization reaction can be performed while maintaining a high pH. The tungsten sulfate aqueous solution and the ammonia water can be used at normal temperature.

Then, the sulfur component is removed from the slurry of the tungsten-containing precipitate obtained by the reverse neutralization method, and the tungsten-containing precipitate from which the sulfur component has been removed is generated. In the slurry of the tungsten-containing precipitate obtained by the reverse neutralization method, sulfate ions remaining without reacting with tungsten or tungsten oxide and sulfur components of hydrogen sulfate ions exist as impurities, and thus it is preferable to remove these.

A method for removing the sulfur component is arbitrary, and for example, a method by filtration using a membrane such as reverse osmosis filtration, ultrafiltration, or microfiltration using ammonia water or pure water, centrifugation, or other known methods can be adopted. When the sulfur component is removed from the slurry of the tungsten-containing precipitate, temperature adjustment is not particularly necessary, and the removal may be performed at room temperature.

Specifically, the slurry of the tungsten-containing precipitate obtained by the reverse neutralization method is decanted using a centrifuge, and washing is repeated until the conductivity of the slurry of the tungsten-containing precipitate reaches 500 µS/cm or less, thereby obtaining the tungsten-containing precipitate from which the sulfur component has been removed. As the conductivity, the liquid temperature of the slurry of the tungsten-containing precipitate was adjusted to 25°C, the measurement section of the conductivity meter (ASCON2 manufactured by AS ONE Corporation) was immersed in the supernatant of the slurry of the precipitate, and the value of the conductivity was read after the value was stabilized.

A washing liquid used for removing the sulfur component is suitably ammonia water. Specifically, 5.0 mass% or less ammonia water is preferable, 4.0 mass% or less ammonia water is more preferable, 3.0 mass% or less ammonia water is still more preferable, and 2.5 mass% ammonia water is particularly preferable. When 5.0 mass% or less ammonia water is used, ammonia containing ammonium ions is appropriate for the sulfur component, and an unnecessary increase in cost can be avoided.

Next, in the step of adding an organic nitrogen compound to the tungsten-containing precipitation slurry obtained by slurrying the tungsten-containing precipitate to generate a tungstic acid dispersion, the tungsten-containing precipitation slurry is obtained by diluting the tungsten-containing precipitate from which the sulfur component has been removed as described above with pure water or the like to form a slurry. The tungsten content of the tungsten-containing precipitation slurry from which the sulfur component has been removed can be determined by collecting a part of the slurry, drying the slurry at 110°C for 24 hours, then firing the slurry at 1,000°C for 4 hours to generate WO₃, measuring the weight of WO₃ thus generated, and calculating the tungsten content of the slurry from the weight.

Then, an organic nitrogen compound is mixed with the tungsten-containing precipitation slurry from which the sulfur component has been removed, whereby a tungstic acid dispersion is obtained.

Specifically, the obtained tungsten-containing precipitation slurry is added to an organic nitrogen compound so that the tungsten content of the final mixture is 0.1 mass% or more and 40 mass% or less in terms of WO₃, and the mixture is mixed with pure water, and the liquid temperature is held at room temperature (25°C) for 1 hour while stirring the mixture, whereby a colorless and transparent tungstic acid dispersion is obtained.

The organic nitrogen compound to be mixed with the tungsten-containing precipitation slurry is preferably an aliphatic amine and/or a quaternary ammonium.

Here, from the viewpoint of solubility, the aliphatic amine is mixed so that the content of the aliphatic amine in the tungsten-containing precipitation slurry is preferably 40 mass% or less, more preferably 0.1 mass% or more and 30 mass% or less, still more preferably 0.5 mass% or more and 20 mass% or less, and particularly preferably 1 mass% or more and 10 mass% or less. The aliphatic amine is more preferably methylamine, dimethylamine, ethylamine, trimethylamine, or a mixture thereof.

On the other hand, from the viewpoint of solubility, the quaternary ammonium is mixed so that the content of the quaternary ammonium in the tungsten-containing precipitation slurry is preferably 40 mass% or less, more preferably 0.1 mass% or more and 30 mass% or less, still more preferably 0.5 mass% or more and 20 mass% or less, and particularly preferably 1 mass% or more and 10 mass% or less. The quaternary ammonium is more preferably tetramethylammonium hydroxide (TMAH) or tetraethylammonium hydroxide (TEAH).

Furthermore, the organic nitrogen compound to be mixed with the tungsten-containing precipitation slurry may not be one of aliphatic amines and quaternary ammonium, but may be a mixture of two or more thereof. Examples thereof include a mixture of two or more organic nitrogen compounds such as methylamine and tetramethylammonium hydroxide (TMAH), dimethylamine and tetramethylammonium hydroxide (TMAH), and methylamine and dimethylamine, and a mixture of three or more organic nitrogen compounds such as methylamine, dimethylamine and tetramethylammonium hydroxide (TMAH), which may be appropriately changed according to the use.

The tungstic acid dispersion thus generated, lithium hydroxide monohydrate, and pure water are weighed so that a molar ratio Li/W of lithium and tungsten in the final mixture is 0.2 or more and 20 or less, and the mixture obtained by mixing them is held at 10°C to 100°C for 1 minute to 3 days while stirring the mixture, whereby a tungsten compound neutralized aqueous solution is obtained.

Specifically, the tungstic acid dispersion, lithium hydroxide monohydrate, and pure water are mixed and stirred so that the tungsten content of the final mixture is 0.001 mass% or more and 23 mass% or less in terms of W atoms and the molar ratio Li/W of lithium and tungsten is 0.001 or more and 5 or less, whereby a tungsten compound neutralized aqueous solution is obtained. Also, in order to remove the ammonia component contained in the obtained tungsten compound neutralized aqueous solution, the following concentration adjusting step may be performed. In the concentration adjusting step, for example, the tungsten compound neutralized aqueous solution is heated and stirred at 60°C to 90°C for 1 hour to 100 hours, and then cooled to room temperature. Thereafter, a solvent (pure water or the like) is added in order to replenish the evaporated solvent (pure water or the like). The addition amount of the solvent is adjusted so that the tungsten content in the tungsten compound neutralized aqueous solution after removing the ammonia component matches the tungsten content of the tungsten compound neutralized aqueous solution before removing the ammonia component.

A method for producing a titanium compound neutralized aqueous solution includes a step of mixing a titanium salt solution and ammonia water to generate a neutralization reaction liquid, a step of washing a titanium-containing precipitate generated in the neutralization reaction liquid, and a step of mixing the washed titanium-containing precipitate, a quaternary ammonium salt, and water to obtain a titanium compound neutralized aqueous solution.

The titanium salt solution may be a solution in which titanium is dissolved, and examples thereof include a titanyl sulfate aqueous solution, a titanyl chloride aqueous solution, and a titanium fluoride aqueous solution.

Here, the titanyl sulfate aqueous solution is obtained by dissolving titanyl sulfate in hot water. The titanyl sulfate aqueous solution is preferably prepared so as to contain 8 to 15 mass% of titanium in terms of TiO₂.

A neutralization reaction liquid can be generated by mixing and reacting the above-described titanium salt solution, for example, a titanyl sulfate aqueous solution, and ammonia water. Here, it is preferable to perform so-called reverse neutralization in which a titanyl sulfate aqueous solution is added to ammonia water and reacted.

The ammonia content of the ammonia aqueous solution used for the reverse neutralization is preferably 10 mass% to 40 mass%. When the ammonia content is 25 mass%, titanium hardly remains undissolved, and titanium or titanium oxide can be completely dissolved in water. On the other hand, the ammonia content is preferably 30 mass% or less since it is in the vicinity of a saturated aqueous solution of ammonia.

From such a viewpoint, the ammonia content of the ammonia aqueous solution is preferably 5 mass% or more, more preferably 10 mass% or more, still more preferably 15 mass% or more, and particularly preferably 20 mass%. On the other hand, the ammonia content is preferably 30 mass% or less, more preferably 35 mass% or less, and still more preferably 40 mass% or less.

In the reverse neutralization, a molar ratio of NH₃/TiO₂ is preferably 1 or more and 200 or less, and more preferably 10 or more and 100 or less as the addition amount of the titanyl sulfate aqueous solution to be added to the ammonia water. Also, in the titanyl sulfate aqueous solution to be added to the ammonia water, a molar ratio of NH₃/SO₄²⁻ is preferably 1 or more, more preferably 5 or more, and still more preferably 10 or more from the viewpoint of generating a titanic acid compound soluble in dilute ammonia water. On the other hand, from the viewpoint of cost reduction, the molar ratio of NH₃/SO₄²⁻ is preferably 50 or less, more preferably 40 or less, and still more preferably 30 or less.

In the reverse neutralization, the time required for adding the titanyl sulfate aqueous solution to ammonia water is preferably 1 minute or less, more preferably 30 seconds or less, and still more preferably 10 seconds or less. That is, it is preferable that the titanyl sulfate aqueous solution is not gradually added over time, but is charged into the ammonia water in as short a time as possible, for example, charged at once, and subjected to a neutralization reaction. Also, in the reverse neutralization, since an acidic titanyl sulfate aqueous solution is added to alkaline ammonia water, the neutralization reaction can be performed while maintaining a high pH.

By washing the slurry of the titanium-containing precipitate in the neutralization reaction liquid obtained by the reverse neutralization, impurities are removed, and a titanium-containing precipitate is obtained. Since unnecessary components other than hydrates or ions of titanium or titanium oxides and ammonia, such as a sulfuric acid compound such as ammonium sulfate exist as impurities in the slurry of the titanium-containing precipitate obtained by the reverse neutralization, it is preferable to remove these components.

The washing method, for example, a method of removing the sulfuric acid compound is arbitrary. For example, in addition to a method by filtration using a membrane such as reverse osmosis filtration, ultrafiltration, or microfiltration using ammonia water or pure water, centrifugation or other known methods can be adopted. Note that the step may be performed at room temperature, and each temperature adjustment is not particularly necessary.

Then, a dispersion medium such as water is added to the titanium-containing precipitate obtained by removing impurities, a quaternary ammonium salt is added to the titanium-containing precipitate, and the mixture is stirred as necessary to accelerate the reaction, whereby a titanium compound neutralized aqueous solution can be prepared.

Here, examples of the quaternary ammonium salt include tetramethylammonium hydroxide (TMAH), tetraethylammonium hydroxide (TEAH), tetrapropylammonium hydroxide, tetrabutylammonium hydroxide, methyltripropylammonium hydroxide, methyltributylammonium hydroxide, tetrapentylammonium hydroxide, tetrahexylammonium hydroxide ethyltrimethylammonium hydroxide, dimethyldiethylammonium hydroxide, benzyltrimethylammonium hydroxide, hexadecyltrimethylammonium hydroxide, and (2-hydroxyethyl)trimethylammonium hydroxide.

As described above, since the solubility of titanium or titanic acid in water can be enhanced if the addition amount of quaternary ammonium is large, it is preferable to mix a quaternary ammonium salt containing 0.44 mol or more of quaternary ammonium with respect to 1 mol of titanium contained in the washed titanium-containing precipitate in the step. On the other hand, from the viewpoint that, defects such as hindrance of film formability and inhibition of the catalytic action may occur when the amount of quaternary ammonium is too large, it is preferable to mix a quaternary ammonium salt having 1.0 mol or less of quaternary ammonium with respect to 1 mol of titanium contained in the washed titanium-containing precipitate.

Each step in the method for producing a titanium compound neutralized aqueous solution described above may be performed at room temperature, and it is not particularly necessary to adjust the temperature of each step.

Further, a titanium alkoxide may be used as the titanium compound neutralized aqueous solution. Examples of the titanium alkoxide include, in addition to titanium tetraisoproxide, titanium i-proxide, titanium n-butoxide, titanium 2-ethylhexoxide, titanium tert-butoxide, titanium stearyl alkoxide, and tetraisopropoxytitanium.

Furthermore, as another example of the method for producing a metal acid compound dispersion of the present invention, the method may include a step of mixing one or more elements X selected from the group consisting of alkali metal elements and/or alkaline earth metal elements with a phosphorus compound or a phosphorus compound solution, and/or a chlorine compound or a chlorine compound solution to generate a phosphorus compound mixed solution and/or a chlorine compound mixed solution, and a mixing step of mixing the phosphorus compound mixed solution and/or the chlorine compound mixed solution with a metal compound neutralized aqueous solution containing two or more metal species M selected from the group consisting of niobium, tantalum, molybdenum, tungsten, and titanium.

First, one or more elements X selected from the group consisting of alkali metal elements and/or alkaline earth metal elements is mixed with a phosphorus compound or a phosphorus compound solution, and/or a chlorine compound or a chlorine compound solution to generate a phosphorus compound mixed solution and/or a chlorine compound mixed solution.

Here, examples of one or more elements X selected from the group consisting of alkali metal elements and/or alkaline earth metal elements include lithium hydroxide monohydrate.

Also, the phosphorus compound may contain one or more selected from inorganic phosphorus compounds, organic phosphorus compounds, and salts thereof.

Furthermore, the phosphorus compound preferably contains one or more selected from phosphoric acid (CAS number: 7664-38-2), condensed phosphoric acid, pyrophosphoric acid (CAS number: 2466-09-3), polyphosphoric acid (CAS number: 8071-16-1), phosphorous acid (CAS number: 13598-36-2), hypophosphorous acid (CAS number: 6303-21-5), ammonium phosphate, primary ammonium phosphate (CAS number: 7722-76-1), secondary ammonium phosphate (CAS number: 7783-28-0), ammonium pyrophosphate, and ammonium polyphosphate.

Moreover, it may be a phosphorus compound solution obtained by adding pure water to the phosphorus compound described above and adjusting the concentration so that the phosphorus content in the metal acid compound dispersion of the present invention is 0.01 mass% or more and 10 mass% or less in terms of P atoms.

Here, examples of the chlorine compound include hydrochloric acid (CAS number: 7647-01-0), hypochlorous acid (CAS number: 7790-92-3), chlorous acid (CAS number: 13898-47-0), chloric acid (CAS number: 7790-93-4), and perchloric acid (CAS number: 7601-90-3).

In addition, the chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

Moreover, it may be a chlorine compound solution obtained by adding pure water to the chlorine compound described above and adjusting the concentration so that the chlorine content in the metal acid compound dispersion of the present invention is 0.0 mass% or more and 2.0 mass% or less in terms of Cl atoms.

Then, the phosphorus compound mixed solution and/or the chlorine compound mixed solution is mixed with a metal compound neutralized aqueous solution containing two or more metal species M selected from the group consisting of niobium, tantalum, molybdenum, tungsten, and titanium, whereby the metal acid compound dispersion of the present invention is obtained.

As the metal compound neutralized aqueous solution containing two or more metal species M selected from the group consisting of niobium, tantalum, molybdenum, tungsten, and titanium, the metal compound neutralized aqueous solution obtained by the method for producing a metal compound neutralized aqueous solution described above can be used.

In order to remove the ammonia component contained in the obtained metal acid compound dispersion of the present invention by the above-described production method, the following concentration adjusting step may be performed. In the concentration adjusting step, for example, the metal acid compound dispersion is heated and stirred at 60°C to 90°C for 1 hour to 100 hours, and then cooled to room temperature. Thereafter, a solvent (pure water or the like) is added in order to replenish the evaporated solvent (pure water or the like). The addition amount of the solvent is adjusted so that the content of metal species M in the metal acid compound dispersion of the present invention after removing the ammonia component matches the content of metal species M in the metal acid compound dispersion of the present invention before removing the ammonia component.

Specifically, the obtained metal compound neutralized aqueous solution is mixed and stirred with a phosphorus compound or a phosphorus compound solution, and/or a chlorine compound or a chlorine compound solution so that the content of metal species M in the final mixture is 0.1 mass% or more and 30 mass% or less in terms of metal species M atoms, whereby the metal acid compound dispersion of the present invention is obtained. In this way, the composition ratio of each component in the metal acid compound dispersion of the present invention thus obtained is preferably as follows.

When the element X contained in the metal acid compound dispersion of the present invention is lithium, the molar ratio Li/(P + Cl) of lithium (Li) and the total amount of the phosphorus compound and/or the chlorine compound (P + Cl) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less. Also when the element X contained in the metal acid compound dispersion of the present invention is an element X selected from alkali metal elements other than lithium and/or alkaline earth metal elements, the molar ratio x/(P + Cl) of the total amount of element X (x) and the total amount of the phosphorus compound and/or the chlorine compound (P + Cl) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less. The case where the element X is a plurality of elements of lithium and another alkali metal element and/or another alkaline earth metal element, or a plurality of elements selected from alkali metal elements other than lithium and/or alkaline earth metals is included.

When the element X contained in the metal acid compound dispersion of the present invention is lithium, the molar ratio Li/P of lithium (Li) and the total amount of the phosphorus compound (P) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less. Also when the element X contained in the metal acid compound dispersion of the present invention is an element X selected from alkali metal elements other than lithium and/or alkaline earth metal elements, the molar ratio x/P of the total amount of element X (x) and the total amount of the phosphorus compound (P) is preferably 0.01 or more and 5 or less from the viewpoint of improving the dispersibility and solubility in water, more preferably 0.01 or more and 2 or less, still more preferably 0.05 or more and 2 or less, and particularly preferably 0.1 or more and 1.95 or less.

Further, the molar ratio m/(P + Cl) of the total amount of metal species M (m) and the total amount of the phosphorus compound and/or the chlorine compound (P + Cl) contained in the metal acid compound dispersion of the present invention is preferably 0.01 or more and 10 or less from the viewpoint of improving the dispersibility and solubility in water, more preferably 0.05 or more and 5 or less, still more preferably 0.1 or more and 3 or less, and particularly preferably 0.1 or more and 1.95 or less.

Furthermore, the molar ratio m/P of the total amount of metal species M (m) and the total amount of the phosphorus compound (P) contained in the metal acid compound dispersion of the present invention is preferably 0.01 or more and 10 or less from the viewpoint of improving the dispersibility and solubility in water, more preferably 0.05 or more and 5 or less, still more preferably 0.1 or more and 3 or less, and particularly preferably 0.1 or more and 1.95 or less.

Moreover, when the element X contained in the metal acid compound dispersion of the present invention is lithium, the molar ratio Li/m of lithium (Li) and the total amount of metal species M (m) is preferably 0.01 or more and 10 or less from the viewpoint of improving the dispersibility and solubility in water, more preferably 0.05 or more and 9 or less, still more preferably 0.1 or more and 8 or less, and particularly preferably 1 or more and 7 or less. Also when the element X contained in the metal acid compound dispersion of the present invention is an element X selected from alkali metal elements other than lithium and/or alkaline earth metal elements, the molar ratio m/x of the total amount of element X (x) and the total amount of metal species M (m) is preferably 0.01 or more and 10 or less from the viewpoint of improving the dispersibility and solubility in water, more preferably 0.05 or more and 9 or less, still more preferably 0.1 or more and 8 or less, and particularly preferably 1 or more and 7 or less. The case where the element X is a plurality of elements of lithium and another alkali metal element and/or another alkaline earth metal element, or a plurality of elements selected from alkali metal elements other than lithium and/or alkaline earth metals is included.

The order of adding the metal compound neutralized aqueous solution, the phosphorus compound or the phosphorus compound solution, and/or the chlorine compound or the chlorine compound solution, one or more elements X selected from the group consisting of alkali metal elements and/or alkaline earth metal elements, pure water, and the like, which are mixed in the mixing step of the method for producing a metal acid compound dispersion of the present invention, is not limited to the above-described order, and can be appropriately changed.

A method for producing a metal acid compound powder containing a metal acid compound in the metal acid compound dispersion of the present invention will be described below.

In the method for producing a dry powder of a metal acid compound among metal acid compound powders, the metal acid compound dispersion obtained by the method for producing a metal acid compound dispersion of the present invention described above is placed in a stationary furnace, and dried, for example, vacuum-dried, at a heating temperature of about 60°C to 200°C for 1 hour to 72 hours, whereby the moisture of the metal acid compound dispersion of the present invention is evaporated, and a dry powder of a metal acid compound containing crystal particles of a metal acid compound contained in the metal acid compound dispersion of the present invention is obtained.

On the other hand, in the method for producing a fired powder of a metal acid compound, as described above, the metal acid compound dispersion of the present invention is vacuum-dried, and the obtained dry powder of a metal acid compound is placed in a stationary furnace and fired at a firing temperature of 300°C or higher and 1,200°C or lower and a firing time of 1 hour or more and 72 hours or less in the air, whereby a fired powder of a metal acid compound is obtained.

Incidentally, the dry powder of the metal acid compound described above and the pulverized fired powder may be used as the metal acid compound powder. In addition, regardless of whether or not the powder is pulverized, the undersize (fine particle side) obtained by classifying the dry powder of the metal acid compound described above and the fired powder with a sieve or the like may be used as the metal acid compound powder. The oversize (coarse particle side) may be pulverized again, classified, and used. It is also possible to use a vibrating sieve into which iron balls coated with nylon or a fluororesin or the like are put as a pulverization medium to perform both pulverization and classification. By performing both classification and pulverization as described above, even if there is an excessively large metal acid compound powder, the metal acid compound powder can be removed. Specifically, when classification is performed using a sieve, it is preferable to use a sieve having an opening of 150 µm to 1,000 µm. When the sieve has an opening of 150 µm to 1,000 µm, the ratio of oversize is not too large, re-pulverization is not repeated, and the metal acid compound powder that needs to be re-pulverized is not classified to undersize.

The metal acid compound powder thus obtained is mixed with water or an organic solvent as a dispersion medium, and wet-pulverized using a medium such as beads, whereby a metal acid compound powder dispersion can be obtained. Here, examples of the organic solvent used as the dispersion medium include alcohols, esters, ketones, aromatic hydrocarbons, aliphatic hydrocarbons, ethers, and mixed solvents thereof. Moreover, in order to improve the film formability of the metal acid compound film using the metal acid compound powder dispersion, a binder such as a resin component may be added. Examples of the resin component used as the binder include acrylic resins, polyurethane, epoxy resins, polystyrene, polycarbonate, glycol-based resins, cellulose-based resins, mixed resins thereof, and copolymer resins.

Further, a method for producing a metal acid compound film containing a metal acid compound in the metal acid compound dispersion of the present invention will be described below.

A method for producing a metal acid compound dried film among metal acid compound films includes an application step of applying a metal acid compound dispersion to a surface of a substrate, and a film drying step of drying the metal acid compound dispersion applied to the surface of the substrate to obtain a dried film.

Specifically, the metal acid compound dispersion obtained by the method for producing a metal acid compound dispersion of the present invention described above is dropped onto the surface of the substrate using a syringe while being filtered through, for example, a filter having a pore diameter of 1 µm, and applied by spin coating (700 rpm for 10 seconds, then, 1500 rpm for 30 seconds) as necessary. Next, the substrate is dried at 110°C for 30 minutes to form a metal acid compound dried film on the surface of the substrate.

A method for producing a metal acid compound fired film among metal acid compound films includes an application step of applying a metal acid compound dispersion to a surface of a substrate, a film drying step of drying the metal acid compound dispersion applied to the surface of the substrate in the air or under vacuum to obtain a dried film, and a film firing step of firing the dried film in the air at a firing temperature of 300°C or higher and 1,200°C or lower and a firing time of 1 hour or more and 12 hours or less to obtain a fired film.

Specifically, as described above, the substrate on which the metal acid compound dried film obtained by applying the metal acid compound dispersion to the surface of the substrate and drying the metal acid compound dispersion is formed is placed in a stationary furnace, and fired in the air at a firing temperature of 300°C or higher and 1,200°C or lower for a firing time of 1 hour or more and 12 hours or less to form a metal acid compound fired film on the surface of the substrate.

Furthermore, a method for producing a positive electrode active material for a lithium ion secondary battery covered with the metal acid compound contained in the metal acid compound dispersion of the present invention will be described below.

The method for producing a positive active material for a lithium ion secondary battery includes a step of mixing the metal acid compound dispersion of the present invention, a positive electrode active material, and a lithium hydroxide aqueous solution as necessary to generate a positive electrode active material slurry for a battery containing a metal acid compound, and a step of drying the positive electrode active material slurry for a battery containing a metal acid compound.

First, a positive electrode active material for a battery, for example, LiMn₂O₄ (manufactured by Merck Corporation: spinel type, particle size < 0.5 µm) is added to a metal acid compound dispersion obtained by diluting the metal acid compound dispersion of the present invention with pure water, whereby a slurry containing a metal acid compound is obtained. Then, a lithium hydroxide aqueous solution is added dropwise while stirring the slurry containing a metal acid compound, and the mixture is held at 90°C for 10 minutes, whereby a positive electrode active material slurry for a battery containing a metal acid compound is generated.

Next, the positive electrode active material slurry for a battery containing a metal acid compound is held at a furnace temperature of 110°C and dried in an air drying furnace for 15 hours, whereby a positive electrode active material for a lithium ion secondary battery covered with a metal acid compound can be produced.

Note that the expression "X to Y" (X and Y are arbitrary numbers) in the present description also includes the meaning of "preferably more than X" or "preferably less than Y" as well as the meaning of "X or more and Y or less" unless otherwise stated. In addition, the expression "X or more" (X is an arbitrary number) or "Y or less" (Y is an arbitrary number) also includes the intention of "preferably more than X" or "preferably less than Y".

### Advantageous Effects of Invention

The metal acid compound dispersion of the present invention has high dispersibility in a polar solvent, particularly water, good solubility in water, and excellent storage stability. In addition, the method for producing a metal acid compound dispersion of the present invention can produce a metal acid compound dispersion having high dispersibility in a polar solvent, particularly water, good solubility in water, and excellent storage stability.

### Brief Description of Drawings

Fig. 1 is a list of compositions of metal acid compound dispersions according to Examples 1 to 19 of the present invention and Comparative Examples 1 to 4.
Fig. 2 is a list of composition ratios of metal acid compound dispersions according to Examples 1 to 19 of the present invention and Comparative Examples 1 to 4.
Fig. 3 is a list of measurement results of metal acid compound dispersions according to Examples 1 to 19 of the present invention and Comparative Examples 1 to 4.

### Best Mode for Carrying Out the Invention

Hereinafter, the metal acid compound dispersion of the embodiment according to the present invention will be further described with reference to the following examples. However, the following examples do not limit the present invention.

### (Example 1)

0.3 g of pyrophosphoric acid (manufactured by FUJIFILM Wako Pure Chemical Corporation, product name: diphosphoric acid (containing phosphoric acid), CAS number: 2466-09-3) and 26.48 g of pure water were placed in a polypropylene container, and 4.23 g of a 5 mass% lithium hydroxide monohydrate aqueous solution was added to the resulting phosphorus compound aqueous solution to obtain a phosphorus compound mixed solution.

Here, a 5 mass% lithium hydroxide monohydrate aqueous solution was obtained by mixing 15 g of LiOH • H₂O and 285 g of pure water.

Then, 1.63 g of a niobium compound neutralized aqueous solution and 2.25 g of a tantalum compound neutralized aqueous solution described later were added to the phosphorus compound mixed solution, and the mixture was stirred and mixed for 30 minutes to obtain a metal acid compound dispersion according to Example 1.

Here, the niobium compound neutralized aqueous solution according to Example 1 was obtained as follows.

100 g of niobium pentoxide was dissolved in 200 g of a 55% hydrofluoric acid aqueous solution, and 830 mL of pure water was added thereto to obtain a niobium fluoride aqueous solution containing 100 g/L of niobium in terms of Nb₂O₅ (Nb₂O₅ = 8.85 mass%). 200 mL of this niobium fluoride aqueous solution was added to 1 L of ammonia water (NH₃ concentration: 25 mass%) in a time shorter than 1 minute (NH₃/Nb₂O₅ molar ratio = 176.9, NH₃/HF molar ratio = 12.1) to obtain a reaction liquid (pH 11). This reaction liquid was a slurry of a niobic acid compound hydrate, in other words, a slurry of a niobium-containing precipitate.

Next, this reaction liquid was decanted using a centrifuge and washed until the amount of released fluoride ions reached 100 mg/L or less to obtain a niobium-containing precipitate from which the fluoride ions had been removed. At this time, ammonia water was used as a washing liquid.

Further, the niobium-containing precipitate from which the fluoride ions had been removed was diluted with pure water to obtain a slurry. A part of the slurry was dried at 110°C for 24 hours and then fired at 1,000°C for 4 hours to generate Nb₂O₅, and the content of Nb₂O₅ contained in the slurry was calculated from the weight thereof.

Then, the niobium-containing precipitation slurry diluted with pure water, 5 mass% lithium hydroxide, and pure water were mixed to obtain a translucent slurry mixture. While stirring this mixture, the mixture was held for 1 hour so that the liquid temperature was 50°C to 100°C, for example, 70°C, thereby obtaining a niobium compound neutralized aqueous solution according to Example 1. The niobium content in the niobium compound neutralized aqueous solution according to Example 1 was 2.86 mass%, and the lithium content was 0.23 mass%.

In addition, the tantalum compound neutralized aqueous solution according to Example 1 was obtained as follows.

First, 137.9 g of tantalum hydroxide (Ta₂O₅ content: 66 mass%) manufactured by MITSUI MINING & SMELTING CO.,LTD. was dissolved in 120 g of a 55 mass% hydrofluoric acid aqueous solution, and 849 mL of pure water was added thereto to obtain a tantalum fluoride aqueous solution (Ta₂O₅ content: 8.2 mass%).

To 1,000 g of this tantalum fluoride aqueous solution, 36.1 g of hydrogen peroxide water (H₂O₂ content: 35 mass%) was added (H₂O₂/Ta molar ratio = 1.0), and the mixture was stirred for 5 minutes to obtain a tantalum compound aqueous solution.

1,036.1 g of this tantalum compound aqueous solution was added to 6.82 L of ammonia water (NH₃ concentration: 25 mass%) in a time shorter than 1 minute (NH₃/Ta molar ratio = 245, NH₃/HF molar ratio = 30.6) to obtain a reaction liquid (pH 11). This reaction liquid was a slurry of a tantalic acid compound hydrate, in other words, a slurry of a tantalum-containing precipitate.

Next, this reaction liquid was decanted using a centrifuge and washed until the amount of released fluoride ions reached 100 mg/L or less to obtain a tantalum-containing precipitate from which the fluoride ions had been removed. At this time, ammonia water was used as a washing liquid.

Further, the tantalum-containing precipitate from which the fluoride ions had been removed was diluted with pure water to obtain a tantalum-containing precipitation slurry. A part of the tantalum-containing precipitation slurry was dried at 110°C for 24 hours and then fired at 1,000°C for 4 hours to generate Ta₂O₅, and the content of Ta₂O₅ contained in the tantalum-containing precipitation slurry was calculated from the weight thereof.

Then, pure water whose temperature was adjusted to 70°C to 80°C, the tantalum-containing precipitation slurry diluted with pure water, and a 5 mass% lithium hydroxide monohydrate aqueous solution were mixed to obtain a tantalum compound neutralized aqueous solution according to Example 1. The tantalum content in the tantalum compound neutralized aqueous solution according to Example 1 was 4.06 mass%, and the lithium content was 0.14 mass%.

### (Example 2)

In Example 2, 0.3 g of pyrophosphoric acid and 27.25 g of pure water were placed in a polypropylene container, and 4.02 g of a 5 mass% lithium hydroxide monohydrate aqueous solution was added to the resulting phosphorus compound aqueous solution to obtain a phosphorus compound mixed solution.

Then, 2.74 g of the niobium compound neutralized aqueous solution used in Example 1 and 0.58 g of a molybdenum compound neutralized aqueous solution described later were added to the phosphorus compound mixed solution, and the mixture was stirred and mixed for 30 minutes to obtain a metal acid compound dispersion according to Example 2.

Here, the molybdenum compound neutralized aqueous solution according to Example 2 was obtained by the method for producing a molybdenum compound neutralized aqueous solution described above. The molybdenum content in the molybdenum compound neutralized aqueous solution according to Example 2 was 2.80 mass%, and the lithium content was 0.37 mass%.

The pyrophosphoric acid and the 5 mass% lithium hydroxide monohydrate aqueous solution used in Example 2 are the same as those in Example 1.

### (Example 3)

In Example 3, 0.31 g of pyrophosphoric acid and 26.94 g of pure water were placed in a polypropylene container, and 4.20 g of a 5 mass% lithium hydroxide monohydrate aqueous solution was added to the resulting phosphorus compound aqueous solution to obtain a phosphorus compound mixed solution.

Then, 2.74 g of the niobium compound neutralized aqueous solution used in Example 1 and 0.88 g of a tungsten compound neutralized aqueous solution described later were added to the phosphorus compound mixed solution, and the mixture was stirred and mixed for 30 minutes to obtain a metal acid compound dispersion according to Example 3.

Here, the tungsten compound neutralized aqueous solution according to Example 3 was obtained by the method for producing a tungsten compound neutralized aqueous solution described above. The tungsten content in the tungsten compound neutralized aqueous solution according to Example 3 was 3.46 mass%, and the lithium content was 0.27 mass%.

The pyrophosphoric acid and the 5 mass% lithium hydroxide monohydrate aqueous solution used in Example 3 are the same as those in Example 1.

### (Example 4)

In Example 4, 0.31 g of pyrophosphoric acid and 25.95 g of pure water were placed in a polypropylene container, and 4.34 g of a 5 mass% lithium hydroxide monohydrate aqueous solution was added to the resulting phosphorus compound aqueous solution to obtain a phosphorus compound mixed solution.

Then, 2.74 g of the niobium compound neutralized aqueous solution used in Example 1 and 1.61 g of a titanium compound neutralized aqueous solution described later were added to the phosphorus compound mixed solution, and the mixture was stirred and mixed for 30 minutes to obtain a metal acid compound dispersion according to Example 4.

Here, the titanium compound neutralized aqueous solution according to Example 4 was obtained by the method for producing a titanium compound neutralized aqueous solution described above. The titanium content in the titanium compound neutralized aqueous solution according to Example 4 was 0.48 mass%.

The pyrophosphoric acid and the 5 mass% lithium hydroxide monohydrate aqueous solution used in Example 4 are the same as those in Example 1.

### (Example 5)

In Example 5, 0.29 g of pyrophosphoric acid and 25.90 g of pure water were placed in a polypropylene container, and 4.01 g of a 5 mass% lithium hydroxide monohydrate aqueous solution was added to the resulting phosphorus compound aqueous solution to obtain a phosphorus compound mixed solution.

Then, 1.63 g of the niobium compound neutralized aqueous solution used in Example 1, 0.57 g of the molybdenum compound neutralized aqueous solution used in Example 2, 0.88 g of the tungsten compound neutralized aqueous solution used in Example 3, and 1.59 g of the titanium compound neutralized aqueous solution used in Example 4 were added to the phosphorus compound mixed solution, and the mixture was stirred and mixed for 30 minutes to obtain a metal acid compound dispersion according to Example 5.

The pyrophosphoric acid and the 5 mass% lithium hydroxide monohydrate aqueous solution used in Example 5 are the same as those in Example 1.

### (Example 6)

In Example 6, 0.32 g of pyrophosphoric acid and 26.4 g of pure water were placed in a polypropylene container, and 4.17 g of a 5 mass% lithium hydroxide monohydrate aqueous solution was added to the resulting phosphorus compound aqueous solution to obtain a phosphorus compound mixed solution.

Then, 3.72 g of the tantalum compound neutralized aqueous solution used in Example 1 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 6.

The pyrophosphoric acid and the 5 mass% lithium hydroxide monohydrate aqueous solution used in Example 6 are the same as those in Example 1.

### (Example 7)

In Example 7, 0.29 g of pyrophosphoric acid and 25.99 g of pure water were placed in a polypropylene container, and 4.15 g of a 5 mass% lithium hydroxide monohydrate aqueous solution was added to the resulting phosphorus compound aqueous solution to obtain a phosphorus compound mixed solution.

Then, 3.75 g of the tantalum compound neutralized aqueous solution used in Example 1 and 0.86 g of the tungsten compound neutralized aqueous solution used in Example 3 were added to the phosphorus compound mixed solution, and the mixture was stirred and mixed for 30 minutes to obtain a metal acid compound dispersion according to Example 7.

The pyrophosphoric acid and the 5 mass% lithium hydroxide monohydrate aqueous solution used in Example 7 are the same as those in Example 1.

### (Example 8)

In Example 8, 0.3 g of pyrophosphoric acid and 24.7 g of pure water were placed in a polypropylene container, and 4.45 g of a 5 mass% lithium hydroxide monohydrate aqueous solution was added to the resulting phosphorus compound aqueous solution to obtain a phosphorus compound mixed solution.

Then, 3.74 g of the tantalum compound neutralized aqueous solution used in Example 1 and 1.63 g of the titanium compound neutralized aqueous solution used in Example 4 were added to the phosphorus compound mixed solution, and the mixture was stirred and mixed for 30 minutes to obtain a metal acid compound dispersion according to Example 8.

The pyrophosphoric acid and the 5 mass% lithium hydroxide monohydrate aqueous solution used in Example 8 are the same as those in Example 1.

### (Example 9)

In Example 9, 0.29 g of pyrophosphoric acid and 25.00 g of pure water were placed in a polypropylene container, and 4.17 g of a 5 mass% lithium hydroxide monohydrate aqueous solution was added to the resulting phosphorus compound aqueous solution to obtain a phosphorus compound mixed solution.

Then, 2.24 g of the tantalum compound neutralized aqueous solution used in Example 1, 0.58 g of the molybdenum compound neutralized aqueous solution used in Example 2, 0.88 g of the tungsten compound neutralized aqueous solution used in Example 3, and 1.64 g of the titanium compound neutralized aqueous solution used in Example 4 were added to the phosphorus compound mixed solution, and the mixture was stirred and mixed for 30 minutes to obtain a metal acid compound dispersion according to Example 9.

The pyrophosphoric acid and the 5 mass% lithium hydroxide monohydrate aqueous solution used in Example 9 are the same as those in Example 1.

### (Example 10)

In Example 10, 0.31 g of pyrophosphoric acid and 24.24 g of pure water were placed in a polypropylene container, and 3.83 g of a 5 mass% lithium hydroxide monohydrate aqueous solution was added to the resulting phosphorus compound aqueous solution to obtain a phosphorus compound mixed solution.

Then, 1.09 g of the niobium compound neutralized aqueous solution used in Example 1, 2.23 g of the tantalum compound neutralized aqueous solution used in Example 1, 0.58 g of the molybdenum compound neutralized aqueous solution used in Example 2, 0.89 g of the tungsten compound neutralized aqueous solution used in Example 3, and 1.63 g of the titanium compound neutralized aqueous solution used in Example 4 were added to the phosphorus compound mixed solution, and the mixture was stirred and mixed for 30 minutes to obtain a metal acid compound dispersion according to Example 10.

The pyrophosphoric acid and the 5 mass% lithium hydroxide monohydrate aqueous solution used in Example 10 are the same as those in Example 1.

### (Example 11)

In Example 11, 0.31 g of pyrophosphoric acid and 25.98 g of pure water were placed in a polypropylene container, and 5.47 g of a 5 mass% lithium hydroxide monohydrate aqueous solution was added to the resulting phosphorus compound aqueous solution to obtain a phosphorus compound mixed solution.

Then, 2.71 g of the niobium compound neutralized aqueous solution used in Example 1 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 11.

The pyrophosphoric acid and the 5 mass% lithium hydroxide monohydrate aqueous solution used in Example 11 are the same as those in Example 1.

### (Example 12)

In Example 12, 0.3 g of pyrophosphoric acid and 29.59 g of pure water were placed in a polypropylene container, and 0.79 g of a 5 mass% lithium hydroxide monohydrate aqueous solution was added to the resulting phosphorus compound aqueous solution to obtain a phosphorus compound mixed solution.

Then, 3.75 g of the tantalum compound neutralized aqueous solution used in Example 1 and 0.6 g of the molybdenum compound neutralized aqueous solution used in Example 2 were added to the phosphorus compound mixed solution, and the mixture was stirred and mixed for 30 minutes to obtain a metal acid compound dispersion according to Example 12.

The pyrophosphoric acid and the 5 mass% lithium hydroxide monohydrate aqueous solution used in Example 12 are the same as those in Example 1.

### (Example 13)

In Example 13, 0.3 g of pyrophosphoric acid and 27.89 g of pure water were placed in a polypropylene container, and 2.48 g of a 5 mass% lithium hydroxide monohydrate aqueous solution was added to the resulting phosphorus compound aqueous solution to obtain a phosphorus compound mixed solution.

Then, 3.75 g of the tantalum compound neutralized aqueous solution used in Example 1 and 0.6 g of the molybdenum compound neutralized aqueous solution used in Example 2 were added to the phosphorus compound mixed solution, and the mixture was stirred and mixed for 30 minutes to obtain a metal acid compound dispersion according to Example 13.

The pyrophosphoric acid and the 5 mass% lithium hydroxide monohydrate aqueous solution used in Example 13 are the same as those in Example 1.

### (Example 14)

In Example 14, 0.38 g of 85 mass% phosphoric acid and 25.93 g of pure water were placed in a polypropylene container, and 4.13 g of a 5 mass% lithium hydroxide monohydrate aqueous solution was added to the resulting phosphorus compound aqueous solution to obtain a phosphorus compound mixed solution.

Then, 3.9 g of the tantalum compound neutralized aqueous solution and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 14.

The tantalum compound neutralized aqueous solution according to Example 14 was obtained in the same manner as the tantalum compound neutralized aqueous solution according to Example 1 except that the tantalum content in the tantalum compound neutralized aqueous solution was 3.89 mass% and the lithium content was 0.15 mass%.

The 5 mass% lithium hydroxide monohydrate aqueous solution used in Example 14 is the same as that in Example 1.

### (Example 15)

In Example 15, 3.38 g of 1 mol/L hydrochloric acid and 23.01 g of pure water were placed in a polypropylene container, and 4.1 g of a 5 mass% lithium hydroxide monohydrate aqueous solution was added to the resulting chlorine compound aqueous solution to obtain a chlorine compound mixed solution.

Then, 3.9 g of the tantalum compound neutralized aqueous solution used in Example 14 and 0.58 g of the molybdenum compound neutralized aqueous solution used in Example 2 were added to the chlorine compound mixed solution, and the mixture was stirred and mixed for 30 minutes to obtain a metal acid compound dispersion according to Example 15.

The 5 mass% lithium hydroxide monohydrate aqueous solution used in Example 15 was the same as that in Example 1.

### (Example 16)

In Example 16, 0.28 g of phosphonic acid and 25.97 g of pure water were placed in a polypropylene container, and 4.14 g of a 5 mass% lithium hydroxide monohydrate aqueous solution was added to the resulting phosphorus compound aqueous solution to obtain a phosphorus compound mixed solution.

Then, 3.95 g of the tantalum compound neutralized aqueous solution used in Example 14 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 16.

The 5 mass% lithium hydroxide monohydrate aqueous solution used in Example 16 is the same as that in Example 1.

### (Example 17)

In Example 17, 0.73 g of 30 mass% phosphinic acid and 25.63 g of pure water were placed in a polypropylene container, and 4.14 g of a 5 mass% lithium hydroxide monohydrate aqueous solution was added to the resulting phosphorus compound aqueous solution to obtain a phosphorus compound mixed solution.

Then, 3.91 g of the tantalum compound neutralized aqueous solution used in Example 14 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 17.

The 5 mass% lithium hydroxide monohydrate aqueous solution used in Example 17 is the same as that in Example 1.

### (Example 18)

In Example 18, 0.33 g of 80 mass% P₂O₅ polyphosphoric acid and 26.02 g of pure water were placed in a polypropylene container, and 4.12 g of a 5 mass% lithium hydroxide monohydrate aqueous solution was added to the resulting phosphorus compound aqueous solution to obtain a phosphorus compound mixed solution.

Then, 3.9 g of the tantalum compound neutralized aqueous solution used in Example 14 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 18.

The 5 mass% lithium hydroxide monohydrate aqueous solution used in Example 18 is the same as that in Example 1.

### (Example 19)

In Example 19, 0.6 g of triethylphosphoric acid and 25.8 g of pure water were placed in a polypropylene container, and 4.13 g of a 5 mass% lithium hydroxide monohydrate aqueous solution was added to the resulting phosphorus compound aqueous solution to obtain a phosphorus compound mixed solution.

Then, 3.9 g of the tantalum compound neutralized aqueous solution used in Example 14 and 0.58 g of the molybdenum compound neutralized aqueous solution used in Example 2 were added to the phosphorus compound mixed solution, and the mixture was stirred and mixed for 30 minutes to obtain a metal acid compound dispersion according to Example 19.

The 5 mass% lithium hydroxide monohydrate aqueous solution used in Example 19 is the same as that in Example 1.

### (Comparative Example 1)

In Comparative Example 1, 0.29 g of pyrophosphoric acid and 29.68 g of pure water were placed in a polypropylene container, and 4.25 g of a 5 mass% lithium hydroxide monohydrate aqueous solution was added to the resulting phosphorus compound aqueous solution to obtain a phosphorus compound mixed solution.

Then, 0.12 g of lithium niobate powder (manufactured by Kojundo Chemical Lab. Co., Ltd.) and 0.58 g of the molybdenum compound neutralized aqueous solution used in Example 2 were added to the phosphorus compound mixed solution, and the mixture was stirred and mixed for 30 minutes to obtain a metal acid compound dispersion according to Comparative Example 2.

The pyrophosphoric acid and the 5 mass% lithium hydroxide monohydrate aqueous solution used in Comparative Example 1 are the same as those in Example 1.

### (Comparative Example 2)

In Comparative Example 2, 0.3 g of pyrophosphoric acid and 29.67 g of pure water were placed in a polypropylene container, and 4.24 g of a 5 mass% lithium hydroxide monohydrate aqueous solution was added to the resulting phosphorus compound aqueous solution to obtain a phosphorus compound mixed solution.

Then, 0.2 g of lithium tantalate powder (manufactured by Kojundo Chemical Lab. Co., Ltd.) and 0.59 g of the molybdenum compound neutralized aqueous solution used in Example 2 were added to the phosphorus compound mixed solution, and the mixture was stirred and mixed for 30 minutes to obtain a metal acid compound dispersion according to Comparative Example 2.

The pyrophosphoric acid and the 5 mass% lithium hydroxide monohydrate aqueous solution used in Comparative Example 2 are the same as those in Example 1.

### (Comparative Example 3)

In Comparative Example 3, 3.29 g of 10 mass% sulfuric acid and 23.07 g of pure water were placed in a polypropylene container, and 4.11 g of a 5 mass% lithium hydroxide monohydrate aqueous solution was added to the resulting sulfur compound aqueous solution to obtain a sulfur compound mixed solution.

Then, 3.9 g of the tantalum compound neutralized aqueous solution used in Example 14 and 0.58 g of the molybdenum compound neutralized aqueous solution used in Example 2 were added to the sulfur compound mixed solution, and the mixture was stirred and mixed for 30 minutes to obtain a metal acid compound dispersion according to Comparative Example 3.

The 5 mass% lithium hydroxide monohydrate aqueous solution used in Comparative Example 3 is the same as that in Example 1.

### (Comparative Example 4)

In Comparative Example 4, 4.39 g of a 5 mass% lithium hydroxide monohydrate aqueous solution, 6.52 g of the tantalum compound neutralized aqueous solution used in Example 14, and 0.95 g of the molybdenum compound neutralized aqueous solution used in Example 2 were added to 23.15 g of pure water contained in a polypropylene container, and the mixture was stirred and mixed for 30 minutes to obtain a metal acid compound dispersion according to Comparative Example 4.

The 5 mass% lithium hydroxide monohydrate aqueous solution used in Comparative Example 4 is the same as that in Example 1.

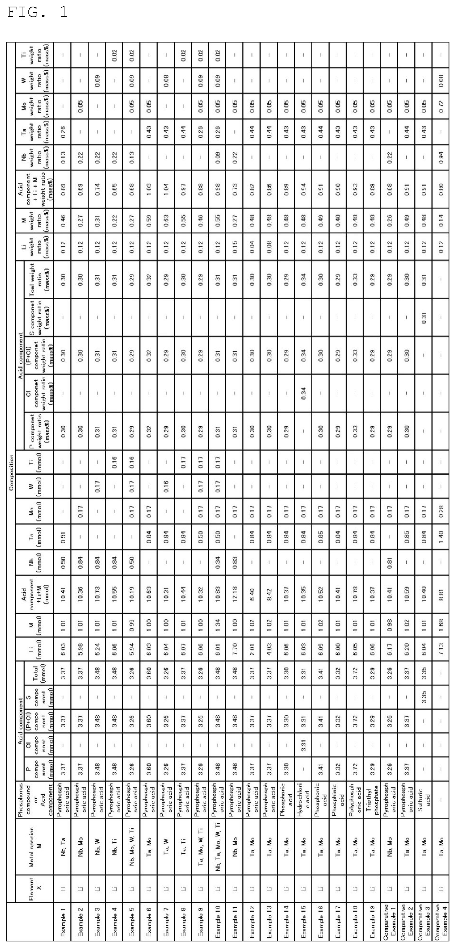

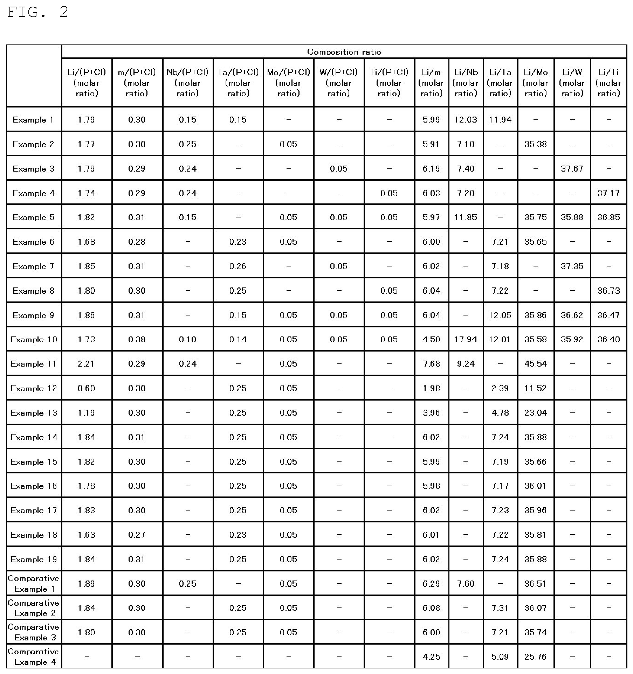

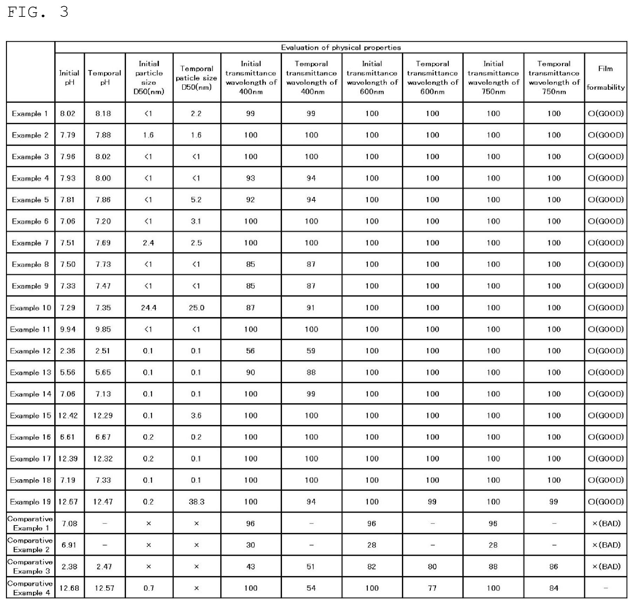

Then, the following physical properties were measured for the metal acid compound dispersions according to Examples 1 to 19 and Comparative Examples 1 to 4. Hereinafter, the measured physical properties and the methods for measuring the physical properties are shown, and the compositions of the metal acid compound dispersions according to Examples 1 to 19 and Comparative Examples 1 to 4 are shown in Fig. 1, the composition ratios of the metal acid compound dispersions according to Examples 1 to 19 and Comparative Examples 1 to 4 are shown in Fig. 2, and the measurement results of the metal acid compound dispersions according to Examples 1 to 19 and Comparative Examples 1 to 4 are shown in Fig. 3.

### <Element analysis>

For the metal acid compound dispersions according to Examples 1 to 19 and Comparative Examples 1 to 4, samples were appropriately diluted with dilute hydrochloric acid as necessary, and Nb mass% in terms of Nb atoms, Ta mass% in terms of Ta atoms, Mo mass% in terms of Mo atoms, W mass% in terms of W atoms, Ti mass% in terms of Ti atoms, P mass% in terms of P atoms, Li mass% in terms of Li atoms, Cl mass% in terms of Cl atoms, and S mass% in terms of S atoms were measured in accordance with JIS K0116:2014 using ICP emission spectrometry (manufactured by Agilent Technologies, Inc.: AG-5110).

### <Measurement of pH>

An electrode (manufactured by HORIBA, Ltd.: standard ToupH electrode 9615S-10D) of a pH meter (manufactured by HORIBA, Ltd.: glass electrode-type hydrogen ion concentration indicator D-51) was immersed in each of the metal acid compound dispersions according to Examples 1 to 19 and Comparative Examples 1 to 4, and after confirming that the liquid temperature was stabilized at 25°C, the pH was measured. "Initial pH" in Fig. 3 refers to the pH of a metal acid compound dispersion adjusted to a liquid temperature of 25°C immediately after being generated. In addition, "temporal pH" in Fig. 3 refers to the pH of the metal acid compound dispersion after being left to stand in a thermostat set at a room temperature of 25°C for 1 month from the day on which the metal acid compound dispersions according to Examples 1 to 19 and Comparative Examples 1 to 4 were generated.

### <Dynamic light scattering>

The particle size distribution is evaluated by dynamic light scattering in accordance with JIS Z 8828:2019 using a zeta potential/particle size/molecular weight analyzer (manufactured by Otsuka Electronics Co., Ltd.: ELSZ-2000). In order to remove dust and the like in the metal acid compound dispersions according to Examples 1 to 19 to be measured immediately before measurement, the dispersions were filtered with a filter having a pore size of 1 µm to perform filtering. Further, D50 represents a particle size up to 50% in terms of volume fraction. "Initial particle size D50 (nm)" in Fig. 3 refers to the particle size (D50) of the particles in the metal acid compound dispersion immediately after being generated. In addition, "temporal particle size D50 (nm)" in Fig. 3 refers to the particle size (D50) of the particles in the metal acid compound dispersion after being left to stand in a thermostat set at a room temperature of 25°C for 1 month from the day on which the metal acid compound dispersions according to Examples 1 to 19 and Comparative Examples 1 to 4 were generated. Furthermore, in the metal acid compound dispersions according to Comparative Examples 1 to 3, since a precipitate was visually recognized in the dispersions immediately after generation, the initial particle size D50 (nm) and the temporal particle size D50 (nm) were not measured. The filtering described above was performed during the measurement of "initial particle size D50 (nm)", but was not performed during the measurement of "temporal particle size D50 (nm)", and only ultrasonic treatment was performed.

### <Transmittance measurement>

3 ml of each of the metal acid compound dispersions according to Examples 1 to 19 and Comparative Examples 1 to 4 was placed in a synthetic quartz cell having an optical path length of 5 mm, and the transmittance in a wavelength region of 400 nm to 760 nm (specifically, transmittance at wavelengths of 400 nm, 600 nm, and 750 nm) of the metals according to Examples 1 to 19 and Comparative Examples 1 to 4 was measured according to the above-described transmittance measurement conditions using a spectrophotometer. "Initial transmittance" in Fig. 3 refers to the transmittance of a metal acid compound dispersion adjusted to a liquid temperature of 25°C immediately after being generated. In addition, "temporal transmittance" in Fig. 3 refers to the transmittance of the metal acid compound dispersion after being left to stand in a thermostat set at a room temperature of 25°C for 1 month from the day on which the metal acid compound dispersions according to Examples 1 to 19 and Comparative Examples 1 to 4 were generated.

### <Film formability test>

Appearance evaluation of a coating film formed on a surface of a glass substrate as a substitute for a current collector plate was performed by observing the coating film with an optical microscope. First, the metal acid compound dispersions according to Examples 1 to 19 and Comparative Examples 1 to 4 were allowed to stand in a thermostat set at a room temperature of 25°C for 1 month from the day on which the metal acid compound dispersions according to Examples 1 to 19 and Comparative Examples 1 to 4 were generated. Next, each of the metal acid compound dispersions according to Examples 1 to 19 and Comparative Examples 1 to 4 after being left to stand for 1 month was dropped onto a 50 mm × 50 mm glass substrate that was degreased and cleaned with acetone and then dried, using a syringe while being filtered through a filter having a pore diameter of 0.22 µm, and applied by spin coating (700 rpm for 10 seconds, then, 1500 rpm for 15 seconds). Then, the applied portion was naturally dried to form a coating film on the glass substrate. The glass substrate was observed with an optical microscope (magnification: 40 times) in a range of 15 mm × 15 mm at the center of the formed coating film. When no particles were present and a film was formed, the dispersion was evaluated as "o (GOOD)" as having excellent film formability, and when particles were observed, the dispersion was evaluated as "× (BAD)" as having no excellent film formability.

As shown in Figs. 1 to 3, each of the metal acid compound dispersions according to Examples 1 to 19 contained two or more metal species M selected from the group consisting of niobium, tantalum, molybdenum, tungsten and titanium, and had one or more elements X selected from the group consisting of alkali metal elements and/or alkaline earth metal elements, and a phosphorus compound and/or a chlorine compound, and when the particle size (D50) of the particles in the metal acid compound dispersion as determined by a dynamic light scattering method in the dispersion was 1000 nm or less, the dispersion had high dispersibility in the dispersion medium and excellent solubility.

Each of the metal acid compound dispersions according to Examples 1 to 19 contained two or more metal species M selected from the group consisting of niobium, tantalum, molybdenum, tungsten, and titanium, and had an alkali metal element and/or one or more elements X selected from the group consisting of alkali metal elements and/or alkaline earth metal elements, and a phosphorus compound and/or a chlorine compound, and when the maximum value of transmittance in a wavelength region of 400 nm to 760 nm is 70%T or more, the dispersion had high dispersibility in the dispersion medium and excellent solubility.

Each of the metal acid compound dispersions according to Examples 1 to 19 was excellent in temporal stability when the content of metal species M in each of the metal acid compound dispersions according to Examples 1 to 19 was 0.01 mass% or more and 30 mass% or less in terms of metal species M atoms.

Each of the metal acid compound dispersions according to Examples 1 to 19 was excellent in temporal stability when the phosphorus content in each of the metal acid compound dispersions according to Examples 1 to 19 was 0.01 mass% or more and 10 mass% or less in terms of P atoms.

For each of the metal acid compound dispersions according to Examples 1 to 19, the temporal particle size (D50) was not found to be much different from the initial particle size (D50) even after 1 month had elapsed, and the dispersion was excellent in temporal stability. In the metal acid compound dispersions according to Comparative Example 1 to 2, a precipitate was observed.

In each of the metal acid compound dispersions according to Examples 1 to 19, when the molar ratio x/M of the total amount (x) of one or more elements X selected from the group consisting of alkali metal elements and/or alkaline earth metal elements and the total amount (m) of two or more metal species M selected from the group consisting of niobium, tantalum, molybdenum, tungsten and titanium was 0.01 or more and 10 or less, the stability of the dispersion during long-term storage was improved. Furthermore, in the case where the element X was Li in each of the metal acid compound dispersions according to Examples 1 to 19, when the molar ratio Li/m of lithium (Li) and the total amount of metal species M (m) was 0.01 or more and 10 or less, the stability of the dispersion during long-term storage was improved.

In each of the metal acid compound dispersions according to Examples 1 to 19, when the molar ratio x/(P + Cl) of the total amount (x) of one or more elements X selected from the group consisting of alkali metal elements and/or alkaline earth metal elements to the total amount (P + Cl) of the phosphorus compound and/or the chlorine compound was 0.01 or more and 5 or less, the stability of the dispersion during long-term storage was improved. Furthermore, in the case where the element X was Li in each of the metal acid compound dispersions according to Examples 1 to 19, when the molar ratio Li/(P + Cl) of lithium (Li) and the total amount of the phosphorus compound and/or the chlorine compound (P + Cl) was 0.01 or more and 5 or less, the stability of the dispersion during long-term storage was improved.

In each of the metal acid compound dispersions according to Examples 1 to 19, when the molar ratio m/(P + Cl) of the total amount of two or more metal species M selected from the group consisting of niobium, tantalum, molybdenum, tungsten and titanium (m) and the total amount of the phosphorus compound and/or the chlorine compound (P + Cl) was 0.01 or more and 10 or less, the stability of the dispersion during long-term storage was improved.

Each of the metal acid compound dispersions according to Examples 1 to 19 was excellent in temporal stability when the pH of the dispersion was 2 or more and 11 or less.

In each of the metal acid compound films formed from the metal acid compound dispersions according to Examples 1 to 19, as a result of observing the coating film formed from each metal acid compound dispersion with an optical microscope, no coarse particles were present in the coating film, and the metal acid compound films had excellent film formability.

The invention disclosed in the present description includes, in addition to the configurations of the respective inventions and the embodiments, those specified by changing these partial configurations to other configurations disclosed in the present description within an applicable range, those specified by adding other configurations disclosed in the present description to these configurations, or those specified by deleting these partial configurations to an extent that a partial action and effect can be obtained and forming a superordinate concept.

### Industrial Applicability

The metal acid compound dispersion according to the present invention has high dispersibility in a polar solvent, particularly water, good solubility in water, and also excellent storage stability. In addition, since the metal acid compound dispersion according to the present invention has excellent storage stability, and the generation rate of defective products due to generation of precipitates can be lowered over time, waste can be reduced, and energy cost in disposal of waste can also be reduced. These points lead to achieving sustainable management and efficient advantages of natural resources, and decarbonization (carbon neutral).

## Claims

1. A metal acid compound dispersion comprising two or more metal species M selected from the group consisting of niobium, tantalum, molybdenum, tungsten, and titanium, comprising:
one or more elements X selected from the group consisting of alkali metal elements and/or alkaline earth metal elements; and
a phosphorus compound and/or a chlorine compound,
wherein a particle size (D50) of the particles in the metal acid compound dispersion as determined by a dynamic light scattering method is 1000 nm or less.

2. A metal acid compound dispersion comprising two or more metal species M selected from the group consisting of niobium, tantalum, molybdenum, tungsten, and titanium, comprising:
one or more elements X selected from the group consisting of alkali metal elements and/or alkaline earth metal elements; and
a phosphorus compound and/or a chlorine compound,
wherein a maximum value of transmittance in a wavelength region of 400 nm to 760 nm is 70%T or more.

3. The metal acid compound dispersion according to claim 1 or 2, wherein the metal species M contains tantalum.

4. The metal acid compound dispersion according to claim 1 or 2, wherein the element X contains Li.

5. The metal acid compound dispersion according to claim 1 or 2, wherein the phosphorus compound contains one or more selected from inorganic phosphorus compounds, organic phosphorus compounds, and salts thereof.

6. The metal acid compound dispersion according to claim 5, wherein the phosphorus compound contains one or more selected from phosphoric acid, condensed phosphoric acid, pyrophosphoric acid, polyphosphoric acid, phosphorous acid, hypophosphorous acid, ammonium phosphate, primary ammonium phosphate, secondary ammonium phosphate, ammonium pyrophosphate, and ammonium polyphosphate.

7. The metal acid compound dispersion according to claim 1 or 2, further comprising hydrogen peroxide.

8. The metal acid compound dispersion according to claim 1 or 2, further comprising ammonia and/or an organic nitrogen compound.

9. The metal acid compound dispersion according to claim 1 or 2, wherein a content of metal species M in the metal acid compound dispersion is 0.01 mass% or more and 30 mass% or less in terms of metal species M atoms.

10. The metal acid compound dispersion according to claim 1 or 2, wherein a phosphorus content in the metal acid compound dispersion is 0.01 mass% or more and 10 mass% or less in terms of P atoms.

11. The metal acid compound dispersion according to claim 1 or 2, wherein a molar ratio x/m of a total amount of element X (x) and a total amount of metal species M (m) in the metal acid compound dispersion is 0.01 or more and 10 or less.

12. The metal acid compound dispersion according to claim 1 or 2, wherein the element X in the metal acid compound dispersion is Li, and a molar ratio Li/m of lithium (Li) and a total amount of metal species M (m) is 0.01 or more and 10 or less.

13. The metal acid compound dispersion according to claim 1 or 2, wherein a molar ratio x/(P + Cl) of a total amount of element X (x) and a total amount of the phosphorus compound and/or the chlorine compound (P + Cl) in the metal acid compound dispersion is 0.01 or more and 5 or less.

14. The metal acid compound dispersion according to claim 1 or 2, wherein the element X in the metal acid compound dispersion is Li, and a molar ratio Li/(P + Cl) of lithium (Li) and a total amount of the phosphorus compound and/or the chlorine compound (P + Cl) is 0.01 or more and 5 or less.

15. The metal acid compound dispersion according to claim 1 or 2, wherein a molar ratio m/(P + Cl) of a total amount of metal species M (m) and a total amount of the phosphorus compound and/or the chlorine compound (P + Cl) in the metal acid compound dispersion is 0.01 or more and 10 or less.

16. The metal acid compound dispersion according to claim 1 or 2, wherein the metal acid compound dispersion is an aqueous dispersion.

17. The metal acid compound dispersion according to claim 1 or 2, wherein a particle size (D50) of the particles in the metal acid compound dispersion as determined by a dynamic light scattering method is 100 nm or less.

18. The metal acid compound dispersion according to claim 1 or 2, wherein the metal acid compound dispersion has a pH of 2 or more and 11 or less.

19. A metal acid compound powder comprising the metal acid compound in the metal acid compound dispersion according to claim 1 or 2.

20. A metal acid compound film comprising the metal acid compound in the metal acid compound dispersion according to claim 1 or 2.

21. A coating agent comprising the metal acid compound dispersion according to claim 1 or 2.

22. A coating agent comprising the metal acid compound powder according to claim 19.

23. The metal acid compound dispersion according to claim 1 or 2, which is used for covering a positive electrode or a positive electrode material for a lithium ion secondary battery.

24. A positive electrode active material for a lithium ion secondary battery, wherein a surface is covered with a metal acid compound contained in the metal acid compound dispersion according to claim 1 or 2.

25. A lithium ion secondary battery comprising a positive electrode whose surface is covered with the positive electrode active material for a lithium ion secondary battery according to claim 24.
